(19) Europäisches Patentamt
European Patent Office
Office européen des brevets

(11) EP 2 781 564 B1

(12) # EUROPEAN PATENT SPECIFICATION

(45) Date of publication and mention of the grant of the patent:
**26.07.2017 Bulletin 2017/30**

(21) Application number: **14155870.0**

(22) Date of filing: **20.02.2014**

(51) Int Cl.:
***C09D 11/107*** (2014.01) ***C09D 11/101*** (2014.01)
***C09D 11/322*** (2014.01) ***C09D 11/40*** (2014.01)
***C09D 11/54*** (2014.01)

(54) **Ink composition for inkjet**

Tintenzusammensetzung für Tintenstrahl

Composition d'encre pour impression à jet d'encre

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2013 JP 2013060729**

(43) Date of publication of application:
**24.09.2014 Bulletin 2014/39**

(73) Proprietor: **Fujifilm Corporation**
**Minato-ku**
**Tokyo (JP)**

(72) Inventors:
- **Sasada, Misato**
**Ashigarakami-gun, Kanagawa 258-8577 (JP)**
- **Yamamoto, Hiroshi**
**Ashigarakami-gun, Kanagawa 258-8577 (JP)**

(74) Representative: **Klunker IP**
**Patentanwälte PartG mbB**
**Destouchesstraße 68**
**80796 München (DE)**

(56) References cited:
**WO-A1-2004/069551** **JP-A- 2003 105 233**
**JP-A- 2003 253 170** **US-A1- 2011 184 108**
**US-A1- 2012 293 578** **US-A1- 2013 066 006**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

BACKGROUND OF THE INVENTION

Technical Field

The present invention relates to an ink composition for an inkjet.

Description of the Related Art

There are various methods for forming an image using an ink composition. Examples of these methods include a method in which an ink composition is simply supplied to a recording medium; a method in which in order to fix an ink composition to a recording medium, an acidic or basic liquid is supplied to the recording medium before or after the ink composition is supplied to the recording medium; and a method in which a photocurable compound is added to an ink composition, after which the ink composition is supplied to a recording medium, and light is irradiated onto the medium to fix an image thereon.

In a case where an image is printed on a recording medium having a surface for recording that is a color other than white or on a transparent or translucent recording medium, the surface to be recorded on may sometimes be printed on in advance with a white ink composition, in order to give colors other than white a favorable appearance. The white ink composition generally includes a white pigment such as titanium dioxide ($TiO_2$) or silica ($SiO_2$).

As this kind of a white ink composition, for example, an inkjet ink including an ink vehicle and a white pigment dispersed in the vehicle, in which the pigment includes particles, at least 5% of the particles have an average particle diameter of 100 nm or more, and at least 25% of the particles have an average particle diameter of 50 nm or less, is known (for example, see Japanese National Phase Publication (JP-A) No. 2010-511747, and Japanese Patent Application Laid-Open (JP-A) Nos. 2009-167377 and 2011-225867).

US 2012/293578 A1 discloses an ink set for inkjet recording, wherein the ink set includes a first ink containing first resin particles and not substantially containing a colorant, and a second ink containing titanium oxide particles and containing the first resin particles in an amount less than 6 weight %, wherein the second ink is ejected substantially at the same time as ejection of the first ink.

US 2011/184108 A1 discloses a white ink composition which contains a white coloring material and a fixing resin component. The fixing resin component includes a styrene acrylic resin and a urethane resin at a mass ratio of the styrene acrylic resin to the urethane resin (styrene acrylic resin/urethane resin) of at least 1/10.

JP 2003-105233 A teaches a water-based ink excellent in covering power. The ink contains at least a combined product of a tabular kaolinite and massive quartz.

JP 2003-253170 A discloses an ink composition which has a good covering property of a transparent film and which can realize good setting stability favorable for an inkjet recording process. The ink composition essentially consists of at least 5 wt.-% titanium oxide as a colorant, a controlled-pH resin prepared by neutralizing a copolymer of an acid value of at most 40 obtained by polymerizing an ethylenically unsaturated carboxylic acid monomer with other monomers copolymerizable therewith in the presence of a water-soluble alcoholic-hydroxyl-containing polymer compound or a copolymerizable surfactant with an inorganic base, and water.

WO 2004/069551 A1 teaches a method of producing ink-jet printed images on plastic surfaces, which comprises the steps of: a. providing a plastic object; b. coating at least part of the surface of the plastic object with a mixture containing a chemically cross-linkable system; c. evaporating off the volatile part of the mixture, thus depositing a solid hydrophilic layer on the surface of the plastic object without causing the coating to cross-link ; d. providing an ink-jet ink comprising a non-reactive colorant and aqueous carrier; e. jetting the ink by means of an ink-jet system onto the surface of the coating on the plastic object so that it is absorbed into the coating; f. providing energy in sufficient quantity to the printed surface to cross-link the entire surface coating including the absorbed ink- jet inks to form a non-smearable print. US 2013/066006 A1 teaches a white inkjet ink for textile printing containing a white pigment and a urethane resin, in which an average particle diameter of the white pigment and an average particle diameter of the urethane resin satisfy the following formula: 2≤average particle diameter of white pigment/average particle diameter of urethane resin≤12.

SUMMARY OF THE INVENTION

A titanium dioxide having favorable whiteness, however, has a large average primary particle diameter and a high specific gravity and, therefore, is easily precipitated or solidified. A white image formed using a white ink composition in which titanium dioxide is precipitated or solidified has insufficient resistance to rubbing. Further, in a case where an image is formed on a white image that has been formed using a white ink composition in which titanium dioxide is precipitated or solidified, using an ink composition having a color other than white, such as black (which is also referred

to as a coloring ink), the color of the colored image formed (which is also referred to as a secondary color) has insufficient density.

The invention has been made in view of the circumstances described above, and an object of the invention is to provide an ink composition for an inkjet which has excellent re-dispersibility, can form an image having superior resistance to rubbing, and can provide a high density of a secondary color.

The present invention is defined in the appended claims. According to an aspect of the invention, an ink composition for an inkjet is provided which includes titanium dioxide having an average primary particle diameter of 200 nm or more, wherein said average primary particle diameter is obtained as an arithmetic average value calculated from a circle equivalent diameter; a water-soluble resin; self-dispersing resin particles having an average particle diameter of 30 nm or less, wherein said average particle diameter is obtained by measuring a volume average particle diameter according to a dynamic light scattering method; and water, wherein a resin included in the self-dispersing resin particles includes at least one of a structural unit having a benzyl group or a structural unit having a phenoxy group, as a structural unit having an aromatic group.

DETAILED DESCRIPTION OF THE INVENTION

The term "process" in the present disclosure encompasses an independent process, as well as a process that cannot be clearly distinguished from another process but yet achieves the expected effect of the process of interest.

In a case in which the amount of a component in the composition is indicated in the present disclosure, when there are plural substances corresponding to the component in the composition, the indicated amount means the total amount of the plural substances present in the composition, unless specifically stated otherwise. For example, in a case in which the amount of a structural unit (for example, structural unit A) in a polymer is indicated in the present disclosure, when there are plural kinds of structural units corresponding to the structural unit (structural unit A), the indicated amount means the total amount of the plural kind of structural units in the polymer, unless specifically stated otherwise.

In the disclosure, "(meth)acrylamide" refers to acrylamide, methacrylamide, or both of acrylamide and methacrylamide, "(meth)acrylic acid" refers to acrylic acid, methacrylic acid or both of acrylamide and methacrylamide, and "(meth)acrylate" refers to acrylate, methacrylate or both of acrylate and methacrylate.

The ink composition for an inkjet of the invention is explained in detail below.

The ink composition for an inkjet may also be referred to as simply "ink composition." Titanium dioxide having an average primary particle diameter of 200 nm or more" may also be referred to as "specific titanium dioxide," and self-dispersing resin particles having an average particle diameter of 50 nm or less may also be referred to as "specific resin particles."

<Ink Composition for Inkjet>

The ink composition for an inkjet of the invention includes at least a titanium dioxide ($TiO_2$) having an average primary particle diameter of 200 nm or more, a water-soluble resin, self-dispersing resin particles having an average particle diameter of 30 nm or less, and water, wherein a resin included in the self-dispersing resin particles includes at least one of a structural unit having a benzyl group or a structural unit having a phenoxy group, as a structural unit having an aromatic group.

The ink composition for an inkjet having such a constitution can exhibit excellent re-dispersibility. In addition, an image, formed using the ink composition of the invention, has superior resistance to rubbing. Furthermore, a color (secondary color) of a colored image, formed using an ink composition having a color other than white, such as black coloring ink composition, on the image formed using the ink composition of the invention, has excellent density.

The reasons why such effects can be obtained are not clearly understood, but the following reasons can be supposed.

An ink composition including titanium dioxide having a comparatively large particle diameter such as an average primary particle diameter of 200 nm or more (specific titanium dioxide) easily provides a formed image having a high white density, and in a case where a colored image is formed on the white image using a coloring ink composition, the colored image has easily a high color density. In a case where the average primary particle diameter of titanium dioxide is 200 nm or more, however, the titanium dioxide may be precipitated or aggregated in the ink composition because of its weight.

In a case where an image (white image) is formed on a transparent recording medium using the ink composition in which titanium dioxide is precipitated or aggregated, it is difficult to uniformly cover the recording medium with the white image. It can be thought that this occurs because there are parts in which a small amount of titanium dioxide exists and parts in which a large amount of titanium dioxide exists in the white image, resulting from the insufficient dispersion of titanium dioxide in the ink composition. It can also be thought that in a case where an ink composition in which titanium dioxide is precipitated or aggregated in the ink composition, is provided on the recording medium, the titanium dioxide

particles may be formed into lamps, and the lamps may exist on the recording medium, thus resulting in weakening the white image against an external load, and also reducing rubbing resistance (resistance to rubbing) of the white image.

The ink composition is sometimes stored after the preparation of the ink composition and thereafter the ink composition is used at the time when an image is formed, rather than using it immediately after the preparation. For example, if the re-dispersibility of the titanium dioxide of the ink composition, which has been stored for one week, and then taken out and shaken, is insufficient, performance of covering a recording medium by a white image formed by the ink composition is insufficient, and the rubbing resistance of the white image is easily reduced.

On the contrary, it can be thought that in a case where an ink composition includes the water-soluble resin, the specific resin particles and water together with the specific titanium dioxide, the re-dispersibility of the titanium dioxide can be increased. It can be thought that this occurs as a result that an interaction between the specific titanium dioxide covered with the water-soluble resin and the specific resin particles inhibits the precipitation, and weakens the structure of the titanium dioxide aggregates. In particular, it can be thought that because the self-dispersing resin particles have an average particle diameter of 40 nm or less, the number of the particles is increased, and thus the effect of the interaction described above is increased. Therefore, even if, for example, the ink composition has been allowed to stand and stored for one week or more and then a container including the ink composition is shaken, the amount of precipitate is less, and titanium dioxide is easily re-dispersed.

It can be thought that in a case where titanium dioxide has excellent re-dispersibility in the ink composition, the titanium dioxide may be less likely to be formed into lumps when an image is formed, and thus an external load may also be less likely to be applied. It can be thought that in a case where components of the ink composition are aggregated and are fixed on a recording medium, the specific titanium dioxide is placed on a recording medium together with the specific resin particles, and thus the specific resin binds the specific titanium dioxide and the recording medium. It can also be thought that because an image is formed using the ink composition including the specific resin particles, the surface of the image is strengthened. As a result, the image is fixed on the recording medium, and the rubbing resistance of the image is excellent because of the strengthened surface of the image.

Furthermore, it can be thought that in the white image formed using the ink composition of the invention, the density of the titanium dioxide may be less likely to be nonuniform on the recording medium, thus resulting in the excellent performance of covering the recording medium by the titanium dioxide having a high white density. Consequently, in a case where a colored image is formed using a coloring ink composition on such a white image, a contrast of the colored image becomes clear, and a color density (color density of a secondary color) of the colored image increases.

Each component of the ink composition of the invention is explained below.

[Self-Dispersing Resin Particles Having Average Particle Diameter of 30 nm or less (Specific Resin Particles)]

The ink composition of the invention includes at least one kind of the self-dispersing resin particles having an average particle diameter of 30 nm or less (the specific resin particles)

The specific resin particles are different from a polymer dispersant described below (a polymer dispersant which covers at least a part of a pigment), and are particles which exist aside from the pigment.

In general, in a case where an ink composition includes resin particles, adhesion of an image to a recording medium and scratch resistance of the image may be improved.

An ink composition may be fixed onto a recording medium as an image as a result of volatilization of a solvent in the ink composition and aggregation of solid matter in the ink composition. The resin particles included in the ink composition allow the ink composition to be easily aggregated and to easily increase its viscosity after the image is formed. This can further improve the adhesion of the ink composition to the recording medium and the scratch resistance of the image.

The average particle diameter of the specific resin particles is 30 nm or less from the standpoint of the dispersion stability. The average particle diameter of the specific resin particles is preferably 1 nm or more, more preferably 10 nm or more, from the standpoint of production suitability.

The particle size distribution of the specific resin particles is not particularly limited, and either particles having a broad particle size distribution or particles having a monodispersed particle size distribution may be used. In a case where the specific resin particles are self-dispersing resin particles having an average particle diameter of 30 nm or less, they may be used as a mixture of two or more kinds thereof.

The average particle diameter and the particle size distribution of the specific resin particles can be obtained by measuring a volume average particle diameter using a NANOTRAC particle size distribution analyzer UPA-EX150 (manufactured by NIKKISO CO., LTD.) according to a dynamic light scattering method.

The term "self-dispersing resin particles" refers to particles of a water-insoluble resin capable of forming a dispersion state in an aqueous medium by functional groups (in particular, an acidic group or its salt) existing in the resin itself, in a case where a dispersion state of the particles is made by a phase inversion emulsification method in the absence of a surfactant.

The term "dispersion state" includes both of an emulsion state in which a water-insoluble resin is dispersed in an aqueous medium in a liquid state and a dispersion state (suspension) in which a water-insoluble resin is dispersed in an aqueous medium in a solid state.

The term "water-insoluble" refers to a case in which a dissolution amount of 5.0 parts by mass or less relative to 100 parts by mass of water (25°C).

The production method of the specific resin particles is not particularly limited, and the resin particles are preferably obtained in a phase inversion emulsification method.

Examples of the phase inversion emulsification method include a method in which after a resin is dissolved or dispersed in a medium (for example, a water-soluble organic solvent, or the like), the mixture is poured into water without addition of a surfactant, which is stirred and mixed in a state in which salt-forming groups (for example, an acidic group) existing in the resin are neutralized, and the solvent is removed therefrom, thereby obtaining an aqueous dispersion in an emulsion or a dispersion state.

As the self-dispersing resin particles, particles having an average particle diameter of 30 nm or less may be selected from self-dispersing resin particles described in paragraphs 0090 to 0121 in JP-A No. 2010-64480 and paragraphs 0130 to 0167 in JP-A-No. 2011-068085 and used.

In order to improve the rubbing resistance of an image formed using the ink composition of the invention, the specific resin particles preferably has a glass transition temperature (Tg) of 90°C or higher. In a case where the specific resin particles has a glass transition temperature of 90°C or higher, the strength of the image formed using the ink composition of the invention may be improved, and the rubbing resistance of the image may be improved.

In order to further increase the friction resistance of the image, the specific resin particles preferably has a glass transition temperature of 100°C or higher.

The upper limit of the glass transition temperature of the specific resin particles is not particularly limited, and it may be less than 150°C.

The glass transition temperature (Tg) of the specific resin particles can be appropriately controlled by a method usually used. For example, the glass transition temperature (Tg) of the specific resin particles can be controlled to a desired range by appropriately selecting a kind and/or a composition ratio of a monomer, that is a material used in forming the specific resin particles (polymerizable compound), or a molecular weight of a resin included the specific resin particles, or the like.

In the invention, a measured Tg, which is obtained by an actual measurement, is applied to the glass transition temperature (Tg) of the specific resin particles.

Specifically, the measured Tg means a value measured using a differential scanning calorimeter (DSC) EXSTAR 6220 manufactured by SII Nano Technology Inc. in usual measurement conditions. In a case where it is difficult to perform the measurement due to decomposition of the resin, or the like, however, a calculated Tg, calculated by using the following calculation formula (1) is applied to the measured Tg. The calculated Tg is a value calculated by the following formula (1).

-Formula (1)-

$$1/Tg = \Sigma (X_i/Tg_i)$$

Here, it is supposed that a resin to be calculated is formed by copolymerization of n kinds of monomers of i = 1 to n. $X_i$ represents a weight fraction of an i$^{th}$ monomer (that is, $\Sigma X_i = 1$), and $Tg_i$ represents a glass transition temperature (the absolute temperature) of a homopolymer of the i$^{th}$ monomer. $\Sigma$ represents a sum of i = 1 to n. As a value of a glass transition temperature ($Tg_i$) of a homopolymer of each monomer, the value described in Polymer Handbook (3rd Edition) (written by J. Brandrup, E. H. Immergut (Wiley-Interscience, 1989)) is used.

A resin included in the specific resin particles (hereinafter which may also be referred to as a "specific resin") has at least a structural unit having an aromatic group, wherein the resin included in the self-dispersing resin particles includes at least one of a structural unit having a benzyl group or a structural unit having a phenoxy group, as a structural unit having an aromatic group.

This can further improve the strength (such as scratch resistance or blocking resistance) of the image formed.

In the specification, a structural unit included in the specific resin may sometimes be referred to as a "constituent component."

(Structural Unit Having Aromatic Group)

The structural unit having an aromatic group includes structural units having a benzyl group and structural units having a phenoxy group.

The structural unit having an aromatic group is preferably a structural unit derived from a monomer having an aromatic group (hereinafter which may also be referred to as an "aromatic group-containing monomer").

The aromatic group-containing monomer is preferably a monomer having an aromatic group derived from an aromatic hydrocarbon and an ethylenically unsaturated bond. The aromatic group-containing monomer may be used singly or as in mixture of two or more kinds thereof.

Examples of the aromatic group-containing monomer include aromatic group-containing (meth)acrylate monomers (for example, phenoxyethyl (meth)acrylate, benzyl (meth)acrylate, and the like), and the like. Of these, from the viewpoints of balancing of hydrophilicity and hydrophobicity of the polymer chain, and performance of fixing the ink composition, the aromatic group-containing monomer is preferably an aromatic group-containing (meth)acrylate monomer, more preferably at least one selected from phenoxyethyl (meth)acrylate or benzyl (meth)acrylate.

(Structural Unit Having Alicyclic Group)

The structural unit having an alicyclic group not falling under the scope of the present invention is preferably a structural unit derived from a monomer having an alicyclic group (hereinafter which may also be referred to as an "alicyclic group-containing monomer").

The alicyclic group-containing monomer is preferably a monomer having an alicyclic group and an ethylenically unsaturated bond, and more preferably (meth)acrylate having an alicyclic group (hereinafter which may also be referred to as an "alicyclic (meth)acrylate").

The alicyclic (meth)acrylate has a structure which includes a structural moiety derived from (meth)acrylic acid and a structural moiety derived from an alcohol, and includes at least one unsubstituted or substituted alicyclic hydrocarbon group at the structural moiety derived from an alcohol. The alicyclic hydrocarbon group may be the structural moiety derived from an alcohol itself, or may be bonded to the structural site derived from an alcohol through a linking group.

The alicyclic hydrocarbon group is not particularly limited as long as it includes a cyclic but non-aromatic hydrocarbon group. The alicyclic hydrocarbon group may be a monocyclic hydrocarbon group, a bicyclic hydrocarbon group, or a polycyclic hydrocarbon group, such as a tri- or higher cyclic hydrocarbon group. Examples of the alicyclic hydrocarbon group include a cycloalkyl group such as a cyclopentyl group or a cyclohexyl group, a cycloalkenyl group, a bicyclohexyl group, a norbornyl group, an isobornyl group, a dicyclopentanyl group, a dicyclopentenyl group, an adamantyl group, a decahydronaphthalenyl group, a perhydrofluorenyl group, a tricyclo[5.2. $1.0^{2,6}$ ]decanyl group, and bicyclo[4.3.0]nonane group.

The alicyclic hydrocarbon group may have a substituent. Examples of the substituent include an alkyl group, an alkenyl group, an aryl group, an aralkyl group, an alkoxy group, a hydroxyl group, a primary amino group, a secondary amino group, a tertiary amino group, an alkylcarbonyl or arylcarbonyl group, and a cyano group. The alicyclic hydrocarbon group may further form a condensed ring. The alicyclic hydrocarbon group preferably has from 5 to 20 carbon atoms in an alicyclic hydrocarbon group moiety, from the viewpoints of viscosity and solubility.

Specific Examples of the alicyclic (meth)acrylate are shown below, but, the alicyclic (meth)acrylate is not limited thereto.

Examples of monocyclic (meth)acrylate include cycloalkyl (meth)acrylates in which the cycloalkyl group has 3 to 10 carbon atoms such as cyclopropyl (meth)acrylate, cyclobutyl (meth)acrylate, cyclopentyl (meth)acrylate, cyclohexyl (meth)acrylate, cycloheptyl (meth)acrylate, cyclooctyl (meth)acrylate, cyclononyl (meth)acrylate or cyclodecyl (meth)acrylate.

Examples of bicyclic (meth)acrylate include isobornyl (meth)acrylate, and norbornyl (meth)acrylate.

Examples of tricyclic (meth)acrylate include adamantyl (meth)acrylate, dicyclopentanyl (meth)acrylate, and dicyclopentenyloxyethyl (meth)acrylate.

The alicyclic (meth)acrylate may be used singly or in mixture of two or more kinds thereof.

Of these, from the viewpoint of dispersion stability, fixing performance, and blocking resistance of the specific resin particles, bicyclic (meth)acrylate or at least one polycyclic (meth)acrylate of tri- or higher cyclic (meth)acrylate, is preferable, and at least one selected from isobornyl (meth)acrylate, adamantyl (meth)acrylate, or dicyclopentanyl (meth)acrylate is more preferable.

In the specific resin, the total contents of the structural units having an aromatic group and the structural units having an alicyclic group is preferably from 3% by mass to 95% by mass. In a case where the total content is within this range, the self- emulsification and the stability of the dispersion state can be improved, and the increase of the viscosity of the ink composition can be inhibited.

From the viewpoint of removal performance (maintenance) the ink composition from an inkjet nozzle (hereinafter, which may also be referred to as a "nozzle") or re-discharging performance after removal, it is more preferable that the specific resin includes a structural unit having an aromatic group.

A more preferable embodiment of the specific resin particles is an embodiment in which the specific resin

includes a structural unit having an aromatic group, and the content of structural units having an aromatic group is from 3% by mass to 45% by mass (more preferably from 3% by mass to 40% by mass, particularly preferably from 5% by mass to 30% by mass) relative to the total amount of the specific resin.

In this embodiment, the glass transition temperature of the specific resin particles can be more easily controlled to 90°C or higher.

(Hydrophilic Structural Unit)

The resin included in the specific resin particles preferably includes a hydrophilic constituent unit, from the standpoint of self-dispersibility in the ink composition.

It is preferable that the hydrophilic constituent unit is derived from a monomer having a hydrophilic group (hereinafter which may also be referred to as a "hydrophilic group-containing monomer").

In this case, the hydrophilic constituent units may be derived from either one kind hydrophilic group-containing monomer or two or more kinds of hydrophilic group-containing monomers.

The hydrophilic group is not particularly limited, and may be a dissociative group or a nonionic hydrophilic group.

The hydrophilic group is preferably a dissociative group, and more preferably an anionic dissociative group, from the standpoint of promotion of self-dispersion and also from the standpoint of stability of the emulsion or dispersion state formed. Examples of dissociative group include a carboxyl group, a phosphate group, and a sulfo group. Of these, the carboxyl group is preferable from the standpoint of fixablity of the ink composition formed using the self-dispersing resin particles.

The hydrophilic group-containing monomer is preferably, from the standpoint of self-dispersibility and aggregation property, a dissociative group-containing monomer, and more preferably a dissociative group-containing monomer having both a dissociative group and an ethylenically unsaturated bond.

Examples of the dissociative group-containing monomer include unsaturated carboxylic acid monomers, unsaturated sulfonic acid monomers, and unsaturated phosphoric acid monomers.

Specific examples of the unsaturated carboxylic acid monomer include (meth)acrylic acid, crotonic acid, itaconic acid, maleic acid, fumaric acid, citraconic acid, and 2-methacryloyloxyethyl succinic acid.

Specific examples of unsaturated sulfonic acid monomer include styrene sulfonic acid, 2-acrylamide-2-methylpropane sulfonic acid, 3-sulfopropyl (meth)acrylate, and bis(3-sulfopropyl) itaconate.

Specific examples of unsaturated phosphoric acid monomer include vinyl phophonic acid, vinyl phosphate, bis(methacryloxyethyl)phosphate, diphenyl-2-acryloyloxyethyl phosphate, diphenyl-2-methacryloyloxyethyl phosphate, and dibutyl-2-acryloyloxyethyl phosphate.

The dissociative group-containing monomer is preferably, from the viewpoint of the dispersion stability and the discharge stability, an unsaturated carboxylic acid monomer, and more preferably (meth)acrylic acid.

The content of the hydrophilic structural units in the resin included in the specific resin particles is not particularly limited, and the content is preferably from 2% by mass to 30% by mass, more preferably from 5% by mass to 20% by mass, particularly preferably from 5% by mass to 15% by mass, relative to the total amount of the specific resin particles, from the standpoints of the dispersion stability.

(Structural Unit Having Alkyl Group)

The resin included in the specific resin particles preferably include a structural unit having an alkyl group, from the standpoint of flexibility of the resin skelton or ease of control of the glass transition temperature (Tg).

It is preferable that in the structural unit having an alkyl group, the alkyl group has from 1 to 4 carbon atoms.

The structural unit having an alkyl group is preferably a structural unit derived from a monomer having an alkyl group (hereinafter which may also be referred to as an "alkyl group-containing monomer").

Examples of the alkyl group-containing monomer include alkyl (meth)acrylates such as methyl (meth)acrylate, ethyl (meth)acrylate, isopropyl (meth)acrylate, n-propyl (meth)acrylate, n-butyl (meth)acrylate, isobutyl (meth)acrylate, t-butyl (meth)acrylate, hexyl (meth)acrylate, and ethylhexyl (meth)acrylate; hydroxyl group-containing ethylenically unsaturated monomers such as hydroxymethyl (meth)acrylate, 2-hydroxyethyl (meth)acrylate, 2-hydroxypropyl (meth)acrylate, 4-hydroxybutyl (meth)acrylate, hydroxypentyl (meth)acrylate, and hydroxyhexyl (meth)acrylate; dialkylaminoalkyl (meth)acrylates such as dimethylaminoethyl (meth)acrylate; N-hydroxyalkyl (meth)acrylamides such as N-hydroxymethyl (meth)acrylamide, N-hydroxyethyl (meth)acrylamide, and N-hydroxybutyl (meth)acrylamide. Examples of the alkyl group-containing monomer further includes (meth)acrylamides, examples of which includes N-alkoxyalkyl (meth)acrylamides such as N-methoxymethyl (meth)acrylamide, N-ethoxymethyl (meth)acrylamide, N-(n- or iso)butoxymethyl (meth)acrylamide, N-methoxyethyl (meth)acrylamide, N-ethoxyethyl (meth)acrylamide, and N-(n- or iso)butoxyethyl (meth)acrylamide.

The alkyl group-containing monomer is preferably alkyl (meth)acrylates, more preferably alkyl (meth)acrylate

whose alkyl group having from 1 to 4 carbon atoms, further preferably methyl (meth)acrylate or ethyl (meth)acrylate, and particularly preferably methyl (meth)acrylate.

The content of the structural units having an alkyl group in the resin included in the specific resin particles is preferably from 5% by mass to 90% by mass, more preferably from 30% by mass to 90% by mass, further preferably from 40% by mass to 90% by mass, particularly preferably from 50% by mass to 90% by mass, and most preferably from 60% by mass to 85% by mass, relative to the total amount of the specific resin particles, from the standpoint of dispersion stability.

The resin included in the specific resin particles may include one or more structural units other than the structural units described above, if necessary.

Preferable embodiments of a copolymerization ratio of the resin forming the specific resin particles, from the viewpoint of easily controlling the glass transition temperature to 90°C or higher, and maintaining dispersion stability at a favorable level, are described as follows.

That is, from the viewpoints above, in a preferable embodiment, the resin included in the specific resin particles may include: a structural unit having an aromatic group (i.e. a benzyl group or a phenoxy group) in a copolymerization ratio of from 3% by mass to 45% by mass (more preferably from 3% by mass to 40% by mass, particularly preferably from 10% by mass to 30% by mass); a hydrophilic structural unit in a copolymerization ratio of from 2% by mass to 30% by mass (more preferably from 5% by mass to 20% by mass, particularly preferably from 5% by mass to 15% by mass); and a structural unit having an alkyl group in a copolymerization ratio of from 5% by mass to 90% by mass (more preferably from 30% by mass to 90% by mass, more preferably from 50% by mass to 90% by mass, particularly preferably from 60% by mass to 85% by mass).

In a more preferable embodiment, the resin included in the specific resin particles may include: at least one of a structural unit derived from benzyl (meth)acrylate or a structural unit derived from phenoxyethyl (meth)acrylate in a copolymerization ratio of from 3% by mass to 45% by mass (more preferably from 3% by mass to 40% by mass, particularly preferably from 5% by mass to 30% by mass); a structural unit derived from (meth)acrylic acid in a copolymerization ratio of from 2% by mass to 30% by mass (more preferably from 5% by mass to 20% by mass, particularly preferably from 5% by mass to 15% by mass); and a structural unit derived from alkyl (meth)acrylate in a copolymerization ratio of from 40% by mass to 90% by mass (more preferably from 50% by mass to 90% by mass, particularly preferably from 60% by mass to 85% by mass).

With respect to the range of the molecular weight of the resin included in the specific resin particles, the resin preferably has a weight average molecular weight of from 3000 to 200000, more preferably from 5000 to 150000, further preferably from 10000 to 100000. In a case where the weight average molecular weight is 3000 or more, the amount of water-soluble component can be effectively controlled. In a case where the weight average molecular weight is 200000 or less, the self-dispersion stability can be improved.

The weight average molecular weight of the resin forming the specific resin particles is measured by gel permeation chromatography (GPC). In GPC, HLC-8020 GPC (manufactured by Toso Corporation) is used, 3 pieces of columns of TSK gel, SUPER MULTIPORE HZ-H (manufactured by Toso Corporation, 4.6 mm ID x 15 cm) are used as columns, and THF (tetrahydrofuran) is used as an eluent. As measurement conditions, a sample concentration of 0.45% by mass, a flow rate of 0.35 ml/minute, a sample injection volume of 10 μl, and a measurement temperature of 40°C are employed. The measurement is performed using an IR detector. A calibration curve is made from 8 samples consisting of "F-40", "F-20", "F-4", "F-1", "A-5000", "A-2500", "A-1000" of "standard sample TSK standard, polystyrene" manufactured by Toso Corporation and "n-propyl benzene".

The ink composition of the invention may include one kind of the specific resin particles, or two or more kinds thereof.

The content of the specific resin particles in the ink composition is preferably 0.5% by mass to 5.0% by mass, more preferably 0.5% by mass to 3.0% by mass, particularly preferably 0.5% by mass to 2.0% by mass, relative to the total mass of the ink composition.

In a case where the content of the specific resin particles is 0.5% by mass or more, rubbing resistance of the image (white image) formed using the ink composition of the invention can be further improved, and in a case where the content of the specific resin particles is 5.0% by mass or less, the discharging performance and the stability of the ink composition can be further improved.

The content of the specific resin particles is preferably from 5% by mass to 40% by mass relative to the total mass of the specific titanium dioxide.

In a case where the content of the specific resin particles is 5% by mass or more relative to the total mass of the specific titanium dioxide, the rubbing resistance of the image can be improved, and in a case where the content of the specific resin particles is 40% by mass or less, the discharge stability is improved.

The content of specific resin particles is more preferably 7% by mass or more, further preferably 10% by mass or more, relative to the total mass of the specific titanium dioxide. The content of the specific resin particles is more preferably 30% by mass or less, further preferably 25% by mass or less, relative to the total mass of the specific titanium

dioxide.

[Titanium Dioxide Having Average Primary Particle Diameter of 200 nm or more (Specific Titanium Dioxide)]

The ink composition of the invention includes at least one kind of the titanium dioxide having an average primary particle diameter of 200 nm or more (the specific titanium dioxide).

Titanium dioxide ($TiO_2$) is also referred to as titanium oxide (IV) or titania. The type of the titanium dioxide may be anatase type, rutile type or brookite-type, and the rutile type is preferable from the standpoint of the weather resistance.

In a case where the titanium dioxide has an average primary particle diameter of 200 nm or more, the white density of the image formed using the ink composition of the invention is increased. In general, in a case where titanium dioxide has an average primary particle diameter of 200 nm or more, titanium dioxide is easily precipitated or aggregated in the ink composition. In the invention, however, because the ink composition includes and the water-soluble resin and the specific resin particles as well as the specific titanium dioxide, the dispersibility of the ink composition is excellent, and the specific titanium dioxide is easily re-dispersed even if the ink composition is stored for a while after the preparation thereof, and then a container containing such a composition is shaken.

The specific titanium dioxide preferably has an average primary particle diameter of 210 nm or more, more preferably 240 nm or more, from the viewpoint of covering performance. Also the specific titanium dioxide preferably has an average primary particle diameter of 350 nm or less, more preferably 280 nm or less, from the viewpoint of the precipitating property.

Here, as the average primary particle diameter of the specific titanium dioxide, an arithmetic average value is adopted which is obtained by directly photographing titanium dioxide particles at a magnification of 10,000 to 100,000 by an electron microscopy (using an electron microscope JEM-1200 FX manufactured by JEOL Ltd.), observing and measuring sizes of the particles from an image photographed, and measuring sizes of 1000 particles. The particle diameter is calculated from a circle equivalent diameter, i.e., a diameter of a circle having the same area as that of a particle photographed.

For example, in a case where the particles are in the shape of an oval, vertical, horizontal and diagonal diameter are measured, an average value thereof is calculated, which is converted into a circle, and a diameter thereof is calculated.

It is preferable that the specific titanium dioxide does not include silica on its particle surface from the standpoint of the re-dispersibility.

It is preferable that at least a part of the particle surface of the specific titanium dioxide is covered with hydroxide or oxide of aluminum by subjecting to a surface treatment at least with aluminum, from the viewpoint of the dispersion stability. In a case where the specific titanium dioxide is subjected to such a surface treatment, the re-dispersibility can be improved.

The silica content on the particle surface of the specific titanium dioxide can be controlled by controlling a mass of silica included in a covering material used in the surface treatment. As described above, it is preferable that the specific titanium dioxide does not include silica on the particle surface thereof, and thus a mass of the silica contained in the covering material used in the surface treatment is preferably 0% by mass.

In the surface treatment of the particles of the specific titanium dioxide, zirconium (Zr), organic substance, or a component derived from zinc may also be included. It is preferable that the particle surface of the specific titanium dioxide obtained by performing the surface treatment includes at least one selected from the group consisting of a titanium atom, an oxygen atom, an aluminum atom, a zirconium atom, a carbon atom and a hydrogen atom.

Commercially available products may be used as the particles of the specific titanium dioxide whose particle surface is surface-treated, and examples thereof include the following brand-name products manufactured by Ishihara Sangyo Kaisha, Ltd. In the list described below, "particle diameter" refers to an average primary particle diameter of particles.

- R-630(which includes Al but does not include Si on the particle surface; particle diameter: 0.24 μm)
- R-680 (which includes Al but does not include Si on the particle surface; particle diameter: 0.21 μm)
- CR-60 (which includes Al but does not include Si on the particle surface; particle diameter: 0.28 μm)
- CR-50-2 (which includes Al and organic substance but does not include Si on the particle surface; particle diameter: 0.25 μm)
- CR-70 Super (which includes Al, Zr and organic substance, but does not include Si on the particle surface; particle diameter: 0.25 μm)
- CR-90 (which includes Al and Si on the particle surface; particle diameter: 0.25 μm)

The content of the specific titanium dioxide in the ink composition is preferably 5% by mass or more, more preferably 10% by mass or more, relative to the total mass of the ink composition, from the viewpoint of increasing the white density of an image (white image) obtained by image formation. The content of the specific titanium dioxide in the

ink composition is preferably 25% by mass or less, more preferably 20% by mass or less, relative to the total mass of the ink composition, from the viewpoint of the discharge stability.

The ink composition of the invention may further include at least one pigment other than the specific titanium dioxide (hereinafter, which may also be referred to as "additional pigment").

The additional pigment is not particularly limited, and may be appropriately selected according to the purpose. For example, either organic pigments or inorganic pigments may be used.

It is preferable that the pigment is practically insoluble or slightly soluble, from the viewpoint of the ink-colorability.

The kind of the pigment is not particularly limited, and any conventionally known organic pigment or inorganic pigment may be used.

Examples of the organic pigment include azo pigments, polycyclic pigments, dye chelates, nitro pigments, nitroso pigments, and aniline black. Of these, more preferable examples of the organic pigment include azo pigments and polycyclic pigments. Examples of the azo pigment include azo lake pigments, insoluble azo pigments, condensed azo pigments, and chelate azo pigments. Examples of the polycyclic pigment include phthalocyanine pigments, perylene pigments, perynone pigments, anthraquinone pigments, quinacridone pigments, dioxazine pigments, indigo pigments, thioindigo pigments, isoindolinone pigments, and quinophthalone pigments. Examples of the dye chelate include basic dye type chelates, and acidic dye type chelates.

Examples of the inorganic pigment include iron oxide, calcium carbonate, barium sulfate, aluminum hydroxide, barium yellow, cadmium red, chrome yellow, and carbon black. Of these, carbon black is particularly preferable. Examples of the carbon black include carbon black produced in a known method such as a contact method, a furnace method or a thermal method.

Specific examples of the pigment, which can be used in the invention, include, pigments described in paragraphs [0142] to [0145] in JP-A No. 2007-100071.

The pigment described above may be used singly or in combination of two or more kinds selected from the same one group or two or more groups among the groups described above.

The content of the additional pigment in the ink composition is preferably 25% by mass or less, more preferably 20% by mass or less, relative to the total mass of the ink composition, from the standpoint of the color density, the graininess, and the stability and the discharge reliability of the ink composition. The additional pigment is not necessarily included in the ink composition. The lower limit of the content of the additional pigment in the ink composition is not particularly limited, and for example the content of the additional pigment may be 1 % by mass or more.

(Dispersant)

In the ink composition of the invention, the titanium dioxide having an average primary particle diameter of 200 nm or more is dispersed in the ink composition by a water-soluble resin described below. Further, in order to aid the dispersion of the titanium dioxide, or enhance the dispersibility of additional pigment, the ink composition may include a dispersant other than the self-dispersing resin particles, described below.

The ink composition of the invention, accordingly, preferably includes at least one dispersant other than the self-dispersing resin particles.

As the dispersant for the pigments (the titanium dioxide having an average primary particle diameter of 200 nm or more and the additional pigment), either a polymer dispersant other than the self-dispersing resin particles or a low molecular weight surfactant dispersant may be used. The polymer dispersant is preferably a water-soluble dispersant.

As the low molecular weight surfactant dispersant, known low molecular weight surfactant dispersants, which are described for example in paragraphs [0047] to [0052] in JP-A No. 2011-178029, may be used.

Examples of the water-soluble dispersant among the polymer dispersants include hydrophilic polymer compounds. Examples of natural hydrophilic polymer compound include plant polymers such as gum arabic, gum tragacanth, guar gum, karaya gum, locust bean gum, arabinogalactone, pectin, and quince seed starch; seaweed polymers such as alginic acid, carrageenan, and agar; animal polymers such as gelatine, casein, albumin, and collagen; microorganism polymers such as xanthene gum and dextran, and the like.

Examples of a hydrophilic polymer compound in which a natural material is used as a raw material and which has been modified include cellulose polymers such as methyl cellulose, ethyl cellulose, hydroxyethyl cellulose, hydroxypropyl cellulose, and carboxymethyl cellulose; starch polymers such as sodium starch glycolate and sodium starch phosphate; seaweed polymer such as sodium alginate and propylene glycol alginate, and the like.

Examples of a synthetic hydrophilic polymer compound include vinyl polymers such as polyvinyl alcohol, polyvinyl pyrrolidone, and polyvinyl methyl ether; acrylic resins such as non-crosslinked polyacrylamide, polyacrylic acid and alkali metal salts thereof, and water-soluble styrene acrylic resins; water-soluble styrene maleic acid resins, water-soluble vinyl naphthalene acrylic resins, water-soluble vinyl naphthalene maleic acid resins, polyvinyl pyrrolidone, polyvinyl alcohol, alkali metal salts of β-naphthalene sulfonic acid condensed with formalin, polymer compounds having a salt of a cationic functional group such as quaternary ammonium or an amino group at its side chain, natural polymer

compounds such as serac, and the like.

Of these, the hydrophilic polymer compound is preferably a water-soluble dispersant to which a carboxyl group is introduced, such as a homopolymer of acrylic acid, methacrylic acid or styrene acrylic acid, or a copolymer formed with an additional monomer having an hydrophilic group.

Among the polymer dispersants, as the water-soluble dispersant, a polymer including both of a hydrophobic moiety and a hydrophilic moiety may be used. Examples thereof include styrene-(meth)acrylic acid copolymers, styrene-(meth)acrylic acid-(meth)acrylic acid ester copolymers, (meth)acrylic acid ester-(meth)acrylic acid copolymers, polyethylene glycol (meth)acrylate-(meth)acrylic acid copolymers, vinyl acetate-maleic acid copolymers, styrenemaleic acid copolymers, and the like.

As the polymer dispersant, known dispersant such as anionic, cationic, or nonionic acrylic copolymer or block-copolymer, can be used. From the viewpoint of the dispersion stability, the polymer dispersant is preferably an anionic or cationic polymer, and is preferably an acrylic copolymer or block-copolymer. The acid value thereof is preferably from 10 mg KOH/g to 100 mg KOH/g.

As the polymer dispersant, any known dispersant can be used, and commercially available product may be used. Examples thereof include DISPERBYK-183, DISPERBYK-2015, DISPERBYK-190, DISPERBYK-192, DISPERBYK-194, BYK-154, and DISPERBYK-2090, which are manufactured by BYK-Chemie; SOLSPERSE 41000, SOLSPERSE 43000, SOLSPERSE 44000, SOLSPERSE 47000, which are manufactured by The Lubrizol Corporation, and the like.

[Water-Soluble Polymerizable Compound]

It is preferable that the ink composition of the invention further includes at least one water-soluble polymerizable compound, from the viewpoint of strength of an image, adhesion against a recording medium, and ink aggregation properties.

The term "water-soluble" in the water-soluble polymerizable compound means that 2% by mass or more of the polymerizable compound is dissolved in distilled water at 25°C, but it is preferable that 5% by mass or more of the water-soluble polymerizable compound is dissolved in in distilled water at 25°C, and it is more preferable that 10% by mass or more of the water-soluble polymerizable compound is dissolved in in distilled water at 25°C.

The term "polymerizable compound" refers to a compound having at least one polymerizable group in the molecule thereof.

The water-soluble polymerizable compound is not particularly limited, and, for example, a compound having an ethylenically double bond in its molecule may be used as the water-soluble polymerizable compound.

Specific examples of the water-soluble polymerizable compound include compounds having a (meth)acrylamide structure in its molecule, compounds having a (meth)acrylic ester structure in its molecule, epoxy monomers, and oxetane monomers.

Here, the term "(meth)acrylic ester structure" means at least one of a methacrylic ester structure and an acrylic ester structure, and the term "(meth)acrylamide structure" means at least one of a methacrylamide structure and an acrylamide structure.

Examples of the compound having a (meth)acrylic ester structure in its molecule include ultraviolet ray curable monomers or oligomers, examples thereof including (meth)acrylic acid esters of a polyhydric alcohol, (meth)acrylic acid ester of a glycidyl ether of a polyhydric alcohol, (meth)acrylic acid esters of a polyethylene glycol, (meth)acrylic acid esters of an ethylene oxide adduct of a polyhydric alcohol, and reaction products of a polybasic acid anhydride with a hydroxyl group-containing (meth)acrylic acid ester. The polyhydric alcohol may be a polyhydric alcohol in which a chain inside has been extended with ethylene oxide chain by addition reaction of ethylene oxide.

In order to improve ink aggregation properties, the water-soluble polymerizable compound is preferably a compound having a (meth)acrylamide structure in its molecule.

Examples of the compound having a (meth)acrylamide structure in its molecule include (meth)acrylamide compounds represented by the following formula (1).

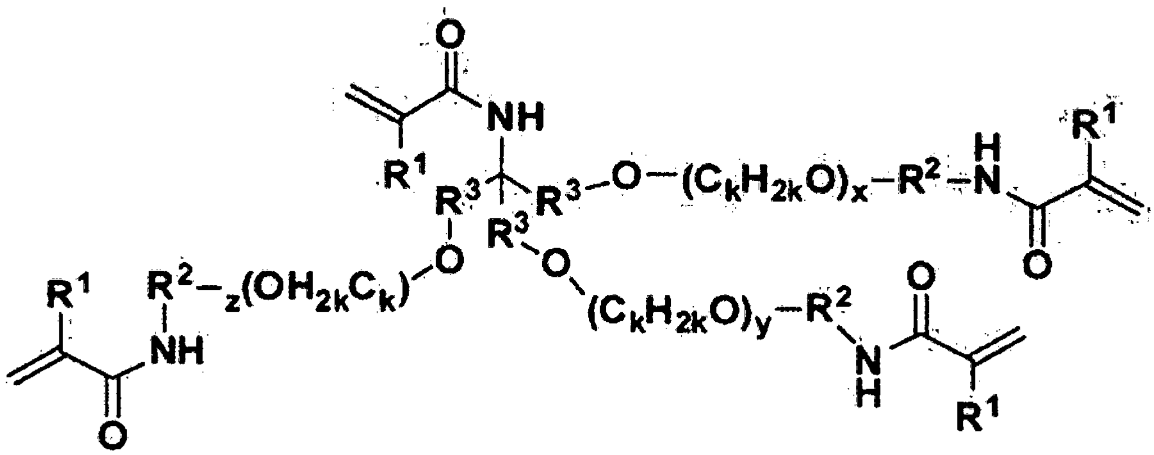

Formula (1)

In formula (1), each of multiple $R^1$s independently represents a hydrogen atom or a methyl group; each of multiple $R^2$s independently represents a linear or branched alkylene group having from 2 to 4 carbon atoms. However, there is no structure in which an oxygen atom and a nitrogen atom, which bond to both ends of $R^2$, bond to the same carbon atom in $R^2$. Each of multiple $R^3$s independently represents a bivalent linking group. k represents 2 or 3; each of x, y and z independently represents an integer from 0 to 6; and x + y + z satisfies 0 to 18.

In one $C_kH_{2k}O$ unit, k is the same.

The (meth)acrylamide compound represented by formula (1) (hereinafter, which may also be referred to as a "specific (meth)acrylamide compound" or a "compound represented by formula (1)") is a tetrafunctional (meth)acrylamide compound having four (meth)acrylamide structures in one molecule. Hereinbelow, the (meth)acrylamide structure may also be referred to as a "(meth)acrylamide group."

This specific (meth)acrylamide compound exhibits curability based on the polymerization reaction caused by application of an active energy ray such as $\alpha$-ray, $\gamma$-ray, X-ray, ultraviolet ray, visible ray, infrared ray or electron beam; or energy such as heat. This enhances the rubbing resistance or the scratch resistance of the formed image. Furthermore, the specific (meth)acrylamide compound exhibits water-solubility, and are sufficiently dissolved in a water-soluble organic solvent such as water or an alcohol.

Here, the term "water-soluble" means that a compound can dissolve in a certain or higher concentration in water, and the compound may be any compound capable of dissolving in an aqueous ink composition or, if necessary, in a treating liquid. Specifically, the solubility in water is preferably 10% by mass or more, more preferably 15% by mass or more.

The specific (meth)acrylamide compound is excellent compared with other tetra- or higher functional polymerizable compounds (for example, tetra- or higher functional (meth)acrylamide compounds other than the specific (meth)acrylamide compound) in terms of solubility in water and polymerization efficiency.

In a case where the ink composition of the invention includes the specific (meth)acrylamide compound, the high covering property can be provided.

In formula (1), $R^1$ represents a hydrogen atom or a methyl group, and $R^1$ is preferably a hydrogen atom. Multiple R's may be the same as or different from each other.

$R^2$ represents a linear or branched alkylene group having from 2 to 4 carbon atoms. Multiple $R^2$s may be the same as or different from each other. $R^2$ is preferably an alkylene group having 3 or 4 carbon atoms, more preferably an alkylene group having 3 carbon atoms, and particularly preferably a linear alkylene group having 3 carbon atoms. The alkylene group in $R^2$ may have a substituent, and examples of the substituent include an aryl group and an alkoxy group.

With respect to $R^2$, however, there is no structure in which an oxygen atom and a nitrogen atom, which bond to both ends of $R^2$, bond to the same carbon atom in $R^2$. $R^2$ is a linear or branched alkylene group, which links an oxygen atom to a nitrogen atom in the (meth)acrylamide group. Here, in a case where the alkylene group has a branched structure, there may be a case in which the oxygen atom and the nitrogen atom in the (meth)acrylamide group, which exist at the both ends, bond to the same carbon atom in the alkylene group to form a structure -O-C-N- (a hemiaminal structure), but the scope of a compound represented by formula (1) does not include the compounds having such a structure. As the compound having the structure -O-C-N- in its molecule is easily decomposed at a position of a carbon

atom, the compound is easily decomposed during storage, and if such a compound is added to an ink composition, the compound undesirably causes reduction of the storage stability.

$R^3$ represents a bivalent linking group, and multiple $R^3$s may be the same as or different from each other. Examples of the bivalent linking group represented by $R^3$ include alkylene groups, arylene groups, heterocyclic groups, and groups in which two or more of these groups are combined, and $R^3$ is preferably an alkylene group. In a case where the bivalent linking group includes the alkylene group, the alkylene group may further include at least one group selected from the group consisting of -O-, -S- and -$NR^a$-. $R^a$ represents a hydrogen atom, or an alkyl group having from 1 to 4 carbon atoms.

In a case where $R^3$ includes an alkylene group, examples of the alkylene group include a methylene group, an ethylene group, a propylene groups, a butylene group, a pentylene group, a hexylene group, a heptylene group, an octylene group, and a nonylene group. The alkylene group in $R^3$ preferably has from 1 to 6 carbon atoms, more preferably from 1 to 3 carbon atoms, and particularly preferably one carbon atom. The alkylene group in $R^3$ may further include at least one selected from the group consisting of -O-, -S- and -$NR^a$-. Examples of the alkylene group including -O- include $-C_2H_4-O-C_2H_4-$, and $-C_3H_6-O-C_3H_6-$. The alkylene group in $R^3$ may further include a substituent, and examples of the substituent include aryl groups, and alkoxy groups.

In a case where $R^3$ includes an arylene group, examples of the arylene group include a phenylene group and a naphthylene group. The arylene group in $R^3$ preferably has from 6 to 14 carbon atoms, more preferably from 6 to 10 carbon atoms, particularly preferably from 6 carbon atoms. The arylene group in $R^3$ may further include a substituent, and examples of the substituent include alkyl groups, and alkoxy groups.

In a case where $R^3$ includes a heterocyclic group, the heterocyclic group is preferably a 5-membered or 6-membered ring, which may be further condensed to form a ring. The heterocyclic ring may be an aromatic heterocyclic or a non-aromatic heterocyclic ring. Examples of the heterocyclic groups include pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, thiadiazole, isoxazole, benzisoxazole, pyrrolidine, piperidine, piperazine, imidazolidine, and thiazoline. Of these, the heterocyclic group is preferably an aromatic heterocyclic group, and is more preferably pyridine, pyrazine, pyrimidine, pyridazine, triazine, pyrazole, imidazole, benzimidazole, triazole, thiazole, benzothiazole, isothiazole, benzisothiazole, or thiadiazole. The heterocyclic groups listed above are shown by a style in which a substituted position is omitted. The substitution position is not limited, and for example, in a case of pyridine, the pyridine group can be substituted at a 2-position, 3-position or 4-position of pyrimidine. As such, the heterocyclic group may be any group of any of all of the substituted groups.

The heterocyclic group may further have a substituent, and examples of the substituent include alkyl groups, aryl groups, and alkoxy groups.

In formula (1), k represents 2 or 3. Multiple ks may be the same as or different from each other. $C_kH_{2k}$ may have a linear structure or a branched structure.

Each of x, y and z independently represents an integer from 0 to 6, and it is preferable that each of x, y and z is independently an integer from 0 to 5, and more preferably, an integer from 0 to 3. $x + y + z$ satisfies 0 to 18, preferably from 0 to 15, and more preferably from 0 to 9.

In an embodiment, it is preferable that $R^1$ represents a hydrogen atom or a methyl group; $R^2$ represents an alkylene group having from 2 to 4 carbon atoms; $R^3$ represents an alkylene group having from 1 to 6 carbon atoms (preferably from 1 to 3 carbon atoms); k represents 2 or 3; each of x, y and z independently represents an integer from 0 to 6; and $x + y + z$ satisfies from 0 to 15.

Specific examples of the compound represented by formula (1) include the following exemplified compounds a to f (polymerizable compounds a to f). In the invention, however, the compound represented by formula (1) is not limited thereto.

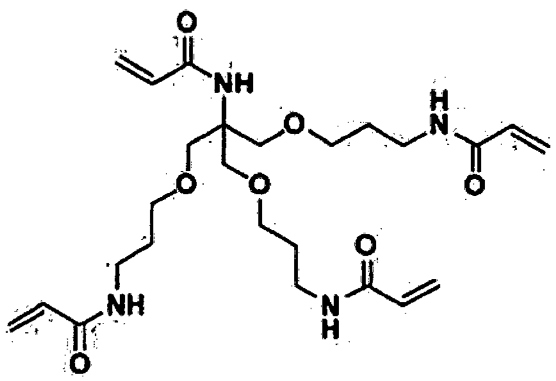

Polymerizable Compound a

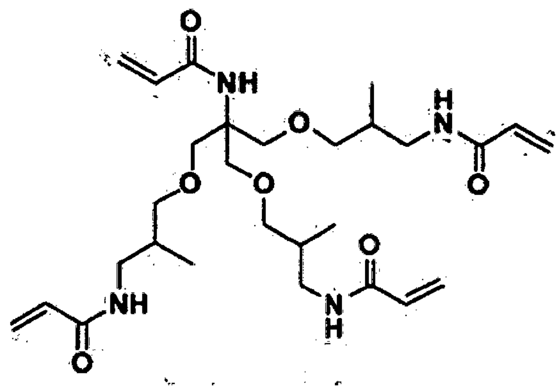

Polymerizable Compound b

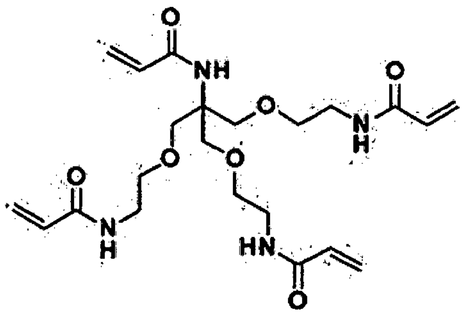

Polymerizable compound c

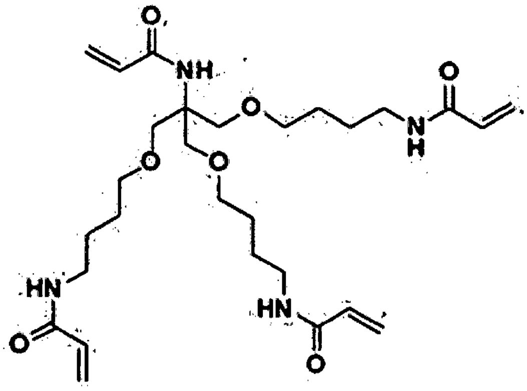

Polymerizable coupound d

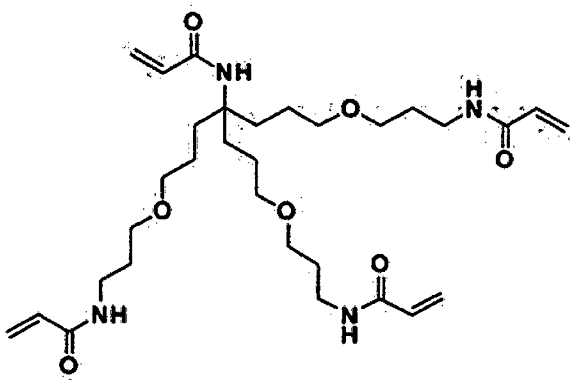

Polymerizable compound e

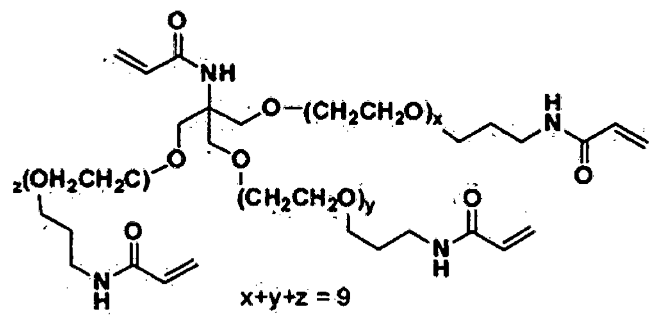

Polymerizable compound f

A method for synthesizing the compound represented by formula (1) is not particularly limited, and the compound can be synthesized, for example, in a method described in paragraphs [0028] to [0033] and paragraphs [0123] to [0139] in JP-A No. 2013-18846.

The content of the specific (meth)acrylamide compound in the ink composition is preferably from 3% by mass to 15% by mass, more preferably from 5% by mass to 13% by mass, further preferably from 7% by mass to 13% by mass, relative to the total amount of the ink composition.

In a case where the content of the specific (meth)acrylamide compound is 3% by mass or more, the uniformity of the viscosity of the ink composition is further improved when the ink composition is dried on a recording medium.

Similarly, in a case where the content of the specific (meth)acrylamide compound is 15% by mass or less, the uniformity of the viscosity of the ink composition is also further improved when the ink composition is dried on a recording medium.

In the invention, in an embodiment, the ink composition preferably includes at least one additional (meth)acrylamide compound, which is not a specific (meth)acrylamide compound described above, in addition to the specific (meth)acrylamide compound.

As the additional (meth)acrylamide compound, at least one (meth)acrylamide compound represented by the following formula (2) (provided that the compounds represented by formula (1) described above are excluded from the scope of the (meth)acrylamide compound represented by formula (2)) is preferable.

Hereinafter, the (meth)acrylamide compound represented by formula (2) may also be referred to as simply a "compound represented by formula (2)."

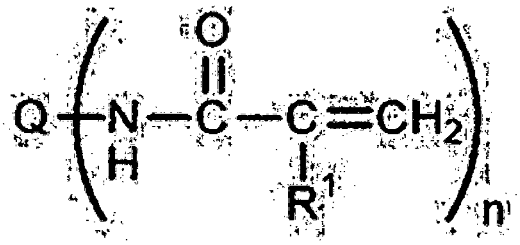

Formula (2)

In formula (2), Q represents a n valent group; $R^1$ represents a hydrogen atom or a methyl group; and n represents an integer of 1 or more.

In a case where n is 4, however, the scope of the compounds represented by formula (2) does not encompass the compound represented by formula (1) described above.

The compound represented by formula (2) is a compound in which an unsaturated vinyl monomer is bonded to a group Q through an amido bond.

A compound of formula (2) wherein n is 1 is a monofunctional (meth)acrylamide compound having one (meth)acrylamide structure in one molecule, and a compound of formula (2) wherein n is an integer of 2 or more is a polyfunctional (meth)acrylamide compound having two or more (meth)acrylamide structures in one molecule.

In formula (2), $R^1$ represents a hydrogen atom or a methyl group, and $R^1$ is preferably a hydrogen atom.

The valence n of the group Q is 1 or more, preferably from 1 to 6, more preferably from 1 to 4, particularly preferably from 1 to 3, from the viewpoint of improving the permeability, the polymerization efficiency and the discharge stability.

In formula (2), in a case where n is 1, the group Q is not particularly limited, so long as Q is a monovalent group capable of linking to the (meth)acrylamide structure. The group Q in a case where n is 1 is preferably selected from water-soluble groups. Specific examples thereof include monovalent residues obtained by removing one or more hydrogen atoms or hydroxyl groups from a compound selected from the compound group X described below.

(Compound Group X)

Polyol compounds such as ethylene glycol, diethylene glycol, triethylene glycol, polyethylene glycol, propylene glycol, dipropylene glycol, tripropylene glycol, polypropylene glycol, 1,3-propanediol, 1,2-butanediol, 1,3-butanediol, 1,4-butanediol, 2,3-butanediol, 1,5-pentanediol, 1,4-pentanediol, 2,4-pentanediol, 3-methyl-1,5-pentanediol, 2-methyl-2,4-pentanediol, 1,5-hexanediol, 1,6-hexanediol, 2,5-hexanediol, glycerol, 1,2,4-butanetriol, 1,2,6-hexanetriol, 1,2,5-pentanetriol, thioglycol, trimethylolpropane, ditrimethylolpropane, trimethylolethane, ditrimethylolethane, neopentyl glycol, pentaerythritol, dipentaerythritol, condensed products thereof, low molecular polyvinyl alcohol, and saccarides; and polyamine compounds such as ethylenediamine, diethylenetriamine, triethylenetetramine, polyethyleneimine, and polypropylenediamine.

Examples of the group Q in a case where n is an integer of 2 or more include substituted or non-substituted alkylene groups having 4 or less carbon atoms such as a methylene group, an ethylene group, a propylene group, and a butylene group; bi- or higher valent linking groups having a saturated or unsaturated heterocycle (a pyridine ring, a imidazole ring, a pyrazine ring, a piperidine ring, a piperazine ring, a morpholine ring, and the like); bi- or higher valent residues of a polyol compound having an oxyalkylene group (preferably an oxyethylene group); bi- or higher valent residues of a polyol compound including 3 or more oxyalkylene groups (preferably oxyethylene groups).

As the compound represented by formula (2), for example, a compound appropriately selected from water-soluble polymerizable compounds described in JP-A Nos. 2010-69805, 2011-46872, 2011-178896, 2011-174013, and 2011-195822 may be used.

The ink composition of the invention preferably includes a monofunctional (meth)acrylamide compound (for example, a compound represented by formula (2) wherein n is 1) together with the compound represented by formula (1) (the specific (meth)acrylamide compound) described above, from the viewpoint of advantage in permeability to a coated layer (for example, a coated layer including an inorganic pigment) of a coated paper is advantageous in a case where the coated paper is used as a recording medium. When the monofunctional (meth)acrylamid compound is included in the ink composition together with the compound represented by formula (1), not only an image formed from the ink composition but also the coated layer of the coated paper hard can be hardened, thus resulting in further improvement of the adhesion of the image to the recording medium.

In this case, the content of the monofunctional (meth)acrylamide compound is preferably from 10% by mass to 30% by mass, more preferably from 10% by mass to 25% by mass, and particularly preferably from 10% by mass to 20% by mass, based on the total amount of the ink composition.

Examples of monofunctional (meth)acrylamide compound include hydroxyethyl (meth)acrylamide, hydroxypropyl (meth)acrylamide, dimethylaminoethyl (meth)acrylamide, dimethylaminopropyl (meth)acrylamide, and isopropyl (meth)acrylamide, and the like. The monofunctional (meth)acrylamide compound is preferably hydroxyethyl (meth)acrylamide, and is particularly preferably hydroxyethyl acrylamide.

The ink composition of the invention may further include a cationic polymerizable compound together with the specific (meth)acrylamide described above.

The cationic polymerizable compound is a compound having a cationic group and a polymerizable group such as an unsaturated double bond, and, examples of the cationic polymerizable compound which may be preferably used include epoxy monomers and oxetane monomers. In a case where the composition includes the cationic polymerizable compound, the cationic property of the ink composition becomes strong because it has the cationic group, color mixing can be further effectively prevented in a case where an anionic ink composition is used.

In the ink composition of the invention, the total content of polymerizable compounds (including at least the specific (meth)acrylamide) is preferably from 10% by mass to 50% by mass, and more preferably from 15% by mass to 35% by mass, relative to the total amount of the ink composition. In a case where the total content of the polymerizable compound is within the range described above, favorable curing reactivity can be provided and and uniform curing on the whole image can be provided.

The white ink composition according to the invention may further include (g) a polymer compound including a repeating unit (g-1) having a partial structure represented by the following formula (I), and a repeating unit (g-2) having a hydrophilic group, if necessary.

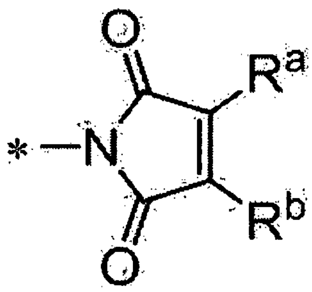

(I)

In formula (I), each of $R^a$ and $R^b$ independently represents a hydrogen atom or an alkyl group having from 1 to 4 carbon atoms, and at least one of $R^a$ or $R^b$ represents an alkyl group having from 1 to 4 carbon atoms. $R^a$ and $R^b$ may be bonded to each other to form a 4-membered to 6-membered alicyclic structure. The symbol * represents a position at which the partial structure represented by formula (I) is bonded to the main chain or a side chain in the polymer compound.

In the specification, the polymer compound (g) including a repeating units (g-1) having a partial structure represented by formula (I) and a repeating units (g-2) having a hydrophilic group may also be referred to as the "specific copolymer (g)."

In a case where the white ink composition according to the invention includes the specific copolymer (g), an image having high film strength and blocking resistance can be formed.

The term "blocking resistance" means that the adhesion of images or undesired adhesion between an image and a back face of a recording medium is suppressed when printed products on which an image is formed are disposed one another in layers. In the image formed from the white ink composition of the invention, excellent blocking resistance can be attained even in a high temperature condition of 80°C to 100°C.

[(g) Specific Copolymer]

Each repeating unit included in the specific copolymer (g) and physical properties of the specific copolymer (g) are explained in detail below.

(Repeating Unit (g-1) Having Partial Structure Represented by Formula (I))

The specific copolymer (g) includes a repeating unit (g-1) having a partial structure represented by the following formula (I):

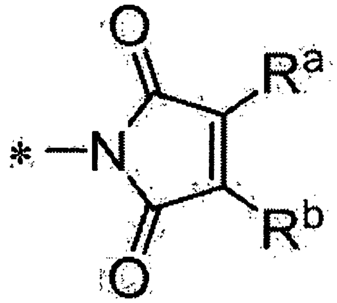

(I)

In formula (I), each of $R^a$ and $R^b$ independently represents a hydrogen atom or an alkyl group having from 1 to 4 carbon atoms, and at least one of $R^a$ or $R^b$ represents an alkyl group having from 1 to 4 carbon atoms. $R^a$ and $R^b$ may be bonded to each other to form a 4-membered to 6-membered alicyclic structure. The symbol * represents a position at which the partial structure represented by formula (I) is bonded to the main chain or a side chain in the polymer compound.

In formula (I), the alkyl group having from 1 to 4 carbon atoms represented by $R^a$ or $R^b$ may be a linear structure or a branched structure. Specific examples of the alkyl group include a methyl group, an ethyl group, a propyl group, an isopropyl group, a butyl group, an isobutyl group, a sec-butyl group, and a t-butyl group. Of these alkyl groups, the alkyl group is preferably an alkyl group having 1 or 2 carbon atoms (a methyl group or an ethyl group), and particularly preferably a methyl group.

In formula (I), the alkyl group represented by $R^a$ or $R^b$ may be an alkyl group having or not having a substituent, and is preferably an alkyl group having no substituent.

$R^a$ and $R^b$ may be bonded to each other to form a 4-membered to 6-membered alicyclic structure.

As $R^a$ and $R^b$, an embodiment in which each of $R^a$ and $R^b$ is an alkyl group having from 1 to 4 carbon atoms, or an embodiment in which $R^a$ and $R^b$ are bonded to each other to form a 4-membered to 6-membered alicyclic structure is preferable, it is more preferable that each of $R^a$ and $R^b$ is an alkyl group having 1 or 2 carbon atoms, and it is further preferable that each of $R^a$ and $R^b$ is a methyl group.

Specific examples of the partial structure represented by formula (I) includes structures shown below, but in the invention, it is not limited thereto.

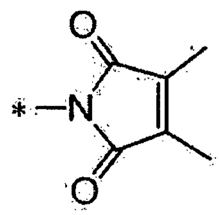

(I-1)

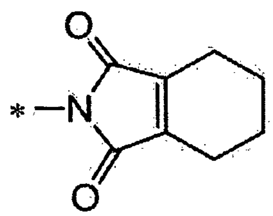

(I-2)

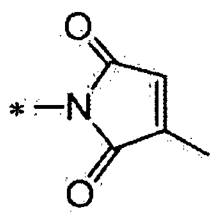

(I-3)

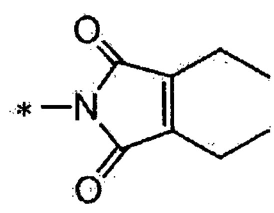

(I-4)

In an embodiment, the specific copolymer (g) may have multiple partial structures represented by formula (I) in its side chain.

The repeating unit (g-1) having a partial structure represented by formula (I) is preferably a repeating unit represented by the following formula (IV).

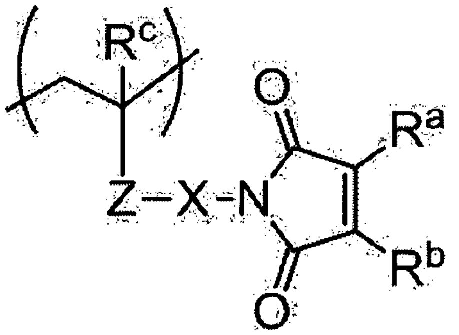

(IV)

In formula (IV), each of $R^a$ and $R^b$ independently represents a hydrogen atom or an alkyl group having from 1 to 4 carbon atoms, and at least one of $R^a$ or $R^b$ represents an alkyl group having from 1 to 4 carbon atoms. $R^a$ and $R^b$ may be bonded to each other to form a 4-membered to 6-membered alicyclic structure. $R^c$ represents a hydrogen atom or a methyl group. Z represents a single bond, -COO-**, or -CONR$^d$-**; $R^d$ represents a hydrogen atom or an alkyl group having from 1 to 4 carbon atoms; and the symbol ** represents a position at which X is bonded to X. X represents a bivalent organic group.

In formula (IV), each of $R^a$ and $R^b$ independently represents a hydrogen atom or an alkyl group having from 1 to 4 carbon atoms, and at least one of $R^a$ or $R^b$ represents an alkyl group having from 1 to 4 carbon atoms. $R^a$ and $R^b$ may be bonded to each other to form a 4-membered to 6-membered ring structure.

$R^a$ and $R^b$ in formula (IV) have the same definitions as $R^a$ and $R^b$ in formula (I), respectively, and the same applies to the preferable ranges.

In formula (IV), $R^c$ represents a hydrogen atom or a methyl group. $R^c$ is preferably a methyl group.

In formula (IV), Z represents a single bond, -COO-**, or -CONR$^d$-**; $R^d$ represents a hydrogen atom or an alkyl group having from 1 to 4 carbon atoms; the symbol ** represents a position at which Z is bonded to X. Z is preferably -COO-**.

In -CONR$^d$-**, $R^d$ represents a hydrogen atom or an alkyl group having from 1 to 4 carbon atoms. The alkyl group having from 1 to 4 carbon atoms represented by $R^d$ may be in a linear structure or a branched structure. Specific examples of the alkyl group include a methyl group, an ethyl group, a propyl group, an isopropyl group, a butyl group, an isobutyl group, a sec-butyl group, and a t-butyl group. $R^d$ is preferably a hydrogen atom or an alkyl group having 1 or 2 carbon atoms, i.e., a methyl group or an ethyl group, and is particularly preferably a hydrogen atom. In a case where $R^d$ represents an alkyl group, the alkyl group may be an alkyl group having or not having a substituent, and is preferably an alkyl group having no substituent.

In formula (IV), X represents a bivalent organic group. Examples of the bivalent organic group include alkylene groups and aralkylene groups, and the bivalent organic group is preferably an alkylene group having from 2 to 20 carbon atoms or an aralkylene group having from 6 to 12 carbon atoms. X is more preferably an alkylene group.

In a case where X represents an alkylene group, the alkylene group is preferablye an alkylene group having from 2 to 20 carbon atoms, more preferably an alkylene group having from 2 to 12 carbon atoms, further preferably an alkylene group having from 2 to 8 carbon atoms. In a case where the number of carbon atoms of the alkylene group represented by X is within this range, the movability of the partial structure represented by formula (IV), which exists at a side chain end in the specific copolymer (g), is improved, whereby the effects of the invention can be further enhanced.

The alkylene group represented by X may be in a linear structure, a structure having branched sited in the alkylene chain, or may have a cyclic structure. The alkylene group may include a bond selected from -O-, -COO-, -OC(=O)- or -CONH- in the alkylene chain. The alkylene group may be substituted by an alkyl group having 4 or less carbon atoms, a hydroxyl group, or a chlorine atom.

The repeating unit represented by formula (IV) is preferably a repeating unit in which each of $R^a$ and $R^b$ is independently an alkyl group having 1 or 2 carbon atoms; $R^c$ is a methyl group; Z is -COO-**; and X is an alkylene group having from 2 to 12 carbon atoms.

The specific copolymer (g) may include only one kind of the repeating unit (g-1) having a partial structure represented by formula (I), or two or more kinds thereof.

The repeating unit (g-1) having a partial structure represented by formula (I) can be introduced into the specific copolymer (g) by copolymerization using a monomer having the partial structure represented by formula (I) as one of copolymerizing components. In a case where the repeating unit (g-1) represented by formula (I) is a repeating unit represented by formula (IV), in the synthesis of the specific copolymer (g), a monomer represented by the following formula (IV') can be used.

The partial structure (g-1) represented by formula (I) can be introduced by a method using a polymer reaction. Examples of such a method include a method in which a prepolymer having a primary amino group is allowed to react

with a corresponding anhydride to obtain a desired compound, a method in which a prepolymer is allowed to react with a compound having a partial structure represented by formula (I) and a functional group capable of forming a bond by a reaction with a functional group in the prepolymer.

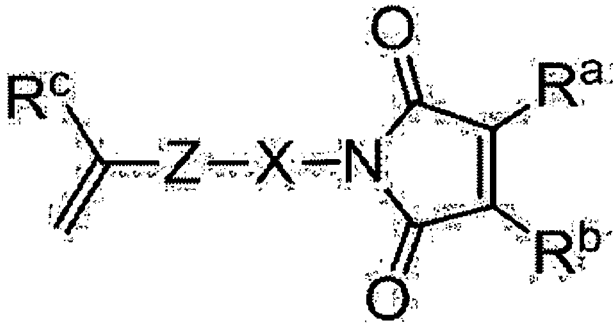

(IV')

In formula (IV'), $R^a$, $R^b$, $R^c$, Z and X have the same definitions as $R^a$, $R^b$, $R^c$, Z and X in formula (IV), respectively, and the same applies to the preferable ranges.

Preferable examples of the monomer represented by formula (IV') include, but not limited to, monomers (IV'-1) to (IV'-11) described below.

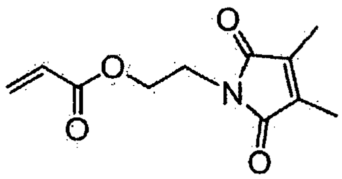

(IV'-1)

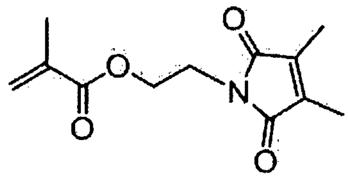

(IV'-2)

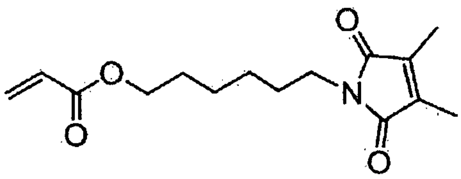

(IV'-3)

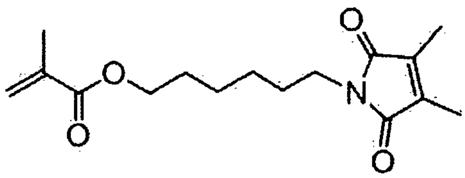

(IV'-4)

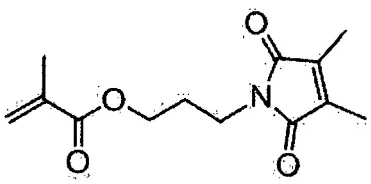

(IV'-5)

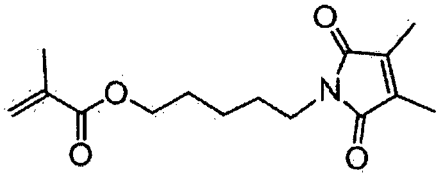

(IV'-6)

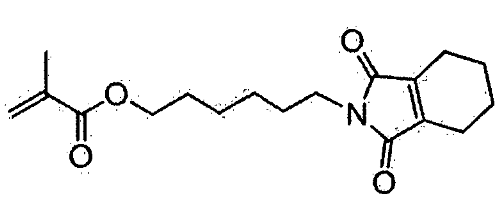

(IV'-7)

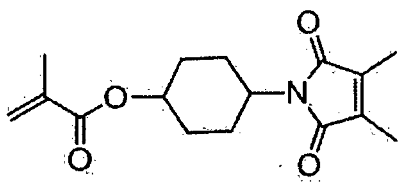

(IV'-8)

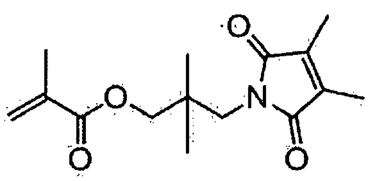

(IV'-9)

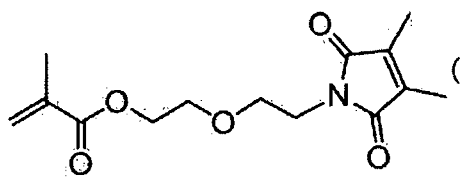

(IV'-10)

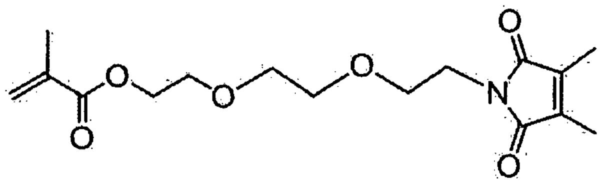

(IV'-11)

The monomer having a partial structure represented by formula (I), as typified by the monomers (IV'-1) to (IV'-11), can be produced referring to methods described, for example, in JP-A No. S 52-988 and JP-A No. H 4-251258.

The content of the repeating units (g-1) having a partial structure represented by formula (1) included in the specific copolymer (g), preferably the repeating units represented by formula (IV), is appropriately selected according to a desired nature of a cured firm (an image) formed from the ink composition. The content of the repeating units (g-1) having a partial structure represented by formula (I) is preferably from 20% by mass to 70% by mass, more preferably from 30% by mass to 70% by mass, further preferably from 40% by mass to 60% by mass, relative to the total mass of the specific copolymer (g), from the viewopoint of strength and flexibility of the image formed.

The strength of the image tends to be decreased if the content is too high or too low. In order to form an ink image having excellent flexibility, the content of the repeating units (g-1) is preferably a lower content within the range described above.

(Repeating Unit (g-2) Having Hydrophilic Group)

The specific copolymer (g) in the invention includes a repeating unit (g-2) having a hydrophilic group.

The hydrophilic group is not particularly limited so long as it has a function to enhance the hydrophilicity of the specific copolymer (g), and may be a nonionic hydrophilic group, or an ionic hydrophilic group (for example, an anionic hydrophilic group or a cationic hydrophilic group).

The nonionic hydrophilic group is not particularly limited, and examples thereof include a residue in which one hydrogen atom is removed from a heterocyclic structure including a nitrogen atom or an oxygen atom, an amido group, a carbamoyl group, an alkyl-substituted carbamoyl group, an alcoholic hydroxyl group, and a group having a polyalkyleneoxy structure.

Examples of a heterocyclic structure in the residue in which one hydrogen atom is removed from a heterocyclic structure including a nitrogen atom or an oxygen atom include lactones such as γ-butyrolacton; cyclic ureas such as 2-pyrrolidone and ethylene urea; cyclic carbonates such as ethylene carbonate and propylene carbonate; and cyclic ethers such as tetrahydrofuran or 1,4-dioxane.

The amido group is preferably an amido group having from 2 to 10 carbon atoms, and it is preferable that a nitrogen atom in the amido group is bonded to a hydrogen atom.

Examples of alkyl-substituted carbamoyl group include monoalkyl carbamoyl groups in which a hydrogen atom bonded to a nitrogen atom in a carbamoyl group is substituted by an alkyl group; and dialkyl carbamoyl groups in which each of two hydrogen atoms bonded to a nitrogen atom in a carbamoyl group is substituted by an alkyl group. The alkyl group may further have a substituent such as a hydroxyl group. Of these alkyl-substituted carbamoyl groups, the alkyl-substituted carbamoyl group is preferably a monoalkyl carbamoyl group, which is substituted by an alkyl group having from 1 to 4 carbon atoms substituted by an alkyl group having from 1 to 8 carbon atoms or a hydroxyl group.

The group having a polyalkyleneoxy structure is not particularly limited, and is preferably a polyalkyleneoxy structure having an alkyleneoxy group having from 1 to 4 carbon atoms in the repeating unit. The alkyleneoxy group in the polyalkyleneoxy structure may be of one kind or a combination of multiple kinds of alkyleneoxy groups. The terminal group of the polyalkyleneoxy structure is preferably a hydroxyl group or an alkoxy group, and more preferably a hydroxyl group or a methoxy group.

The ionic hydrophilic group is not particularly limited, and examples thereof include a carboxyl group, a sulfo group, a phosphate group, a phosphonate group, a phenolic hydroxyl group, and a quaternary ammonium group. The ionic hydrophilic group may form a salt.

In a case where the ionic hydrophilic group forms a salt, the salt may be, for example, an alkali metal salts (for example a salt of Li, Na, K, or the like), or an onium salt such as an ammonium salt, a pyridinium salt or a phosphonium salt. Of these, the salt is preferably an alkali metal salt (Li, Na, K, and the like) or an ammonium salt.

Of these hydrophilic group, the hydrophilic group is preferably an amido group, a carbamoyl group, an alkyl-substituted carbamoyl group, an alcoholic hydroxyl group, a group having a polyalkyleneoxy structure, a carboxyl group, a sulfo group, or a salt thereof, and is more preferably an alcoholic hydroxyl group, an alkyl-substituted carbamoyl group, a carboxyl group, a sulfo group, or a salt thereof. The hydrophilic group is particularly preferably a carboxyl group or a salt thereof.

The repeating unit (g-2) having a hydrophilic group is preferably a repeating unit represented by the following

formula (V).

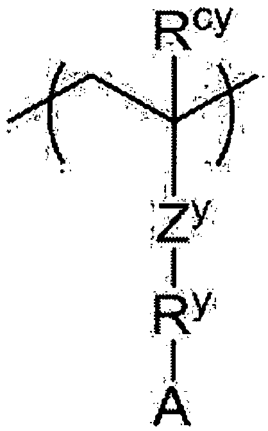

(V)

In formula (V), $R^{cy}$ represents a hydrogen atom or a methyl group. $Z^y$ represents - COO-***, -CONR$^{dy}$-***, or a single bond; and $R^{dy}$ represents a hydrogen atom or an alkyl group having from 1 to 4 carbon atoms. $R^y$ represents a single bond, or a group selected from the group consisting of alkylene groups, arylene groups and aralkylene groups. A represents a hydrophilic group. The symbol *** represents a position at which $Z^y$ is bonded to $R^y$.

Formula (V) is explained in detail.

In formula (V), $R^{cy}$ represents a hydrogen atom or a methyl group.

In formula (V), $Z^y$ represents -COO-***, -CONR$^{dy}$-***, or a single bond, and is preferably -COO-***. The symbol *** represents a position at whch $Z^y$ is bonded to $R^Y$.

$R^{dy}$ represents a hydrogen atom, or an alkyl group having from 1 to 4 carbon atoms. The alkyl group having from 1 to 4 carbon atoms may be of a linear structure or a branched structure. Specifically, the alkyl group having from 1 to 4 carbon atoms represents a methyl group, an ethyl group, a propyl group, an isopropyl group, a butyl group, an isobutyl group, a sec-butyl group, or a t-butyl group. $R^{dy}$ is preferably a hydrogen atom or an alkyl group having from 1 to 2 carbon atoms (that is, a methyl group or an ethyl group), and is particularly preferably a hydrogen atom.

$R^{dy}$ may be a group having or not have a substituent, and is preferably a group having no substituent. Examples of the substituent possessed by $R^{dy}$ include an aryl group having from 6 to 8 carbon atom, an alkoxy group having from 1 to 8 carbon atoms, a hydroxyl group, a carboxyl group, and a halogen atom (for example, F, Cl, Br, or I).

In formula (V), $R^y$ represents a single bond, or a group selected from the group consisting of alkylene groups, arylene groups and aralkylene groups, and is preferably an alkylene group having from 1 to 20 carbon atoms, an arylene group having from 6 to 20 carbon atoms, or an aralkylene group having from 7 to 20 carbon atoms.

In a case where $R^y$ is a group selected from the group alkylene groups, arylene group and aralkylene groups, such a group may be a group having or not have a substituent. In a case where $R^y$ is a group selected from the group consisting of alkylene groups, arylene groups and aralkylene groups, in the structure of the alkylene group, the arylene group or the aralkylene group represented by $R^y$, an ether bond, an ester bond, an amido bond, or a urethane bond may exist.

In formula (V), $R^y$ is preferably a single bond.

In a case where $R^y$ is a group selected from the group consisting of alkylene groups, arylene groups and aralkylene groups, such a group may further have a substituent. Examples of the substituent include an aryl group having from 6 to 8 carbon atoms, an alkoxy group having from 1 to 8 carbon atoms, a hydroxyl group, a carboxyl group, a halogen atoms (for example, F, Cl, Br, or I).

In a case where $R^y$ is an alkylene group having from 1 to 20 carbon atoms, the alkylene group may have a linear structure, a branched structure, or a cyclic structure. In a case where $R^y$ is an alkylene group, the number of carbon atoms of the alkylene group is more preferably from 2 to 12, and further preferably from 2 to 8. Specific examples of the alkylene group as $R^y$ include $-CH_2-$, $-C_2H_4-$, $-C(CH_3)_2-CH_2-$, $-CH_2C(CH_3)_2CH_2-$, $-C_6H_{12}-$, - $C_4H_7(C_4H_9)C_4H_8-$, $C_{18}H_{36}-$, 1,4-trans-cyclohexylene group , $-C_2H_4-OCO-C_2H_4-$, $-C_2H_4-OCO-$, $-C_2H_4-O-C_5H_{10}-$, $-CH_2-O-C_5H_9(C_5H_{11})-$, $-C_2H_4-CONH-C_2H_4-$, $-C_4H_8-OCONH-C_6H_{12}-$, $-CH_2-OCONHC_{10}H_{20}-$, and $-CH_2CH(OH)CH_2-$.

In a case where $R^y$ is an arylene group having from 6 to 20 carbon atoms, the arylene group preferably has from 6 to 18 carbon atoms, more preferably from 6 to 14 carbon atoms, and particularly preferably from 6 to 10 carbon atoms. Specific examples of the arylene group represented by $R^y$ include phenylene groups, biphenylene groups, $-C_6H_4-CO-C_6H_4-$, and naphthylene groups.

In a case where $R^y$ is an aralkylene group having from 7 to 20 carbon atoms, the aralkylene group preferably has from 7 to 18 carbon atoms, more preferably 7 to 14 carbon atoms, and particularly preferably 7 to 10 carbon atoms.

Specific examples of the aralkylene group represented by $R^y$ include $-C_3H_6-C_6H_4-$, $-C_2H_4-C_6H_4-C_6H_4-$, $-CH_2-C_6H_4-C_6H_4-C_2H_4-$, and $-C_2H_4-OCO-C_6H_4-$.

Examples of the hydrophilic group represented by A in formula (V) include the hydrophilic group described above, and the same applies to preferable ranges.

In a case where the specific copolymer (g) includes a repeating unit represented by formula (V), the content of the repeating units represented by formula (V) included in the specific copolymer (g) is described below.

In a case where the hydrophilic group A in formula (V) is an ionic hydrophilic group, the content of the repeating units represented by formula (V) is preferably from 5% by mass to 50% by mass, more preferably from 5% by mass to 40% by mass, particularly preferably from 5% by mass to 20% by mass, relative to the total mass of the repeating units (g-2) having the hydrophilic group, included in the specific copolymer (g),.

In a case where the hydrophilic group A in formula (V) is a nonionic hydrophilic group, the content of the repeating units represented by formula (V) is preferably from 20% by mass to 95% by mass, more preferably from 30% by mass to 80% by mass, particularly preferably from 30% by mass to 70% by mass, relative to the total mass of the repeating units (g-2) having the hydrophilic group, included in the specific copolymer (g).

The repeating unit represented by formula (V) is derived from a monomer represented by the following formula (V'), and a repeating unit (a-2) is introduced into the specific copolymer (a) using the monomer as a copolymerizing component.

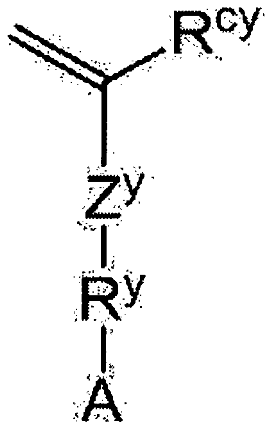

(V')

$R^{cy}$, $Z^y$, $R^y$, and A in formula (V') have the same definitions as $R^{cy}$, $Z^y$, $R^y$, and A in formula (V), respectively, and the same applies to preferable ranges.

Preferable examples of the monomer represented by formula (V') include, but not limited to, the monomer compounds shown below, in the invention.

Preferable examples of the monomer represented by formula (V') include methoxypolyethyleneglycol (meth)acrylate, polyethyleneglycol (meth)acrylate, polypropyleneglycol (meth)acrylate, poly(ethyleneglycol-co-propylene glycol)(meth)acrylate, 2-hydroxyethyl (meth)acrylate, glycerol (meth)acrylate (meth)acryloyloxyethyl ethylene urea, vinyl pyrrolidone, 3-(meth)acryloyloxy-γ-butyrolactone, acrylamide, tert-butyl acrylamide, N,N-dimethyl (meth)acrylamide, diacetone acrylamide, sodium (meth)acrylate, potassium (meth)acrylate, tetrabutyl ammonium (meth)acrylate, mono(meth)acryloyloxyethyl succinic acid, sodium mono(math)acryloyloxyethyl succinate, sodium mono(meth)acryloyloxyethyl phthalate, (meth)acryloyloxyethyl acid phosphate, sodium 2-acrylamide-2-methylpropane sulfonate, 2-acrylamide-2-methylpropane sulfonic acid, styrene sulfonic acid, sodium styrene sulfonate,and vinylbenzoic acid.

As the monomer represented by formula (V'), any of commercially available products may be used. The monomer represented by formula (V') can be produced in a common method which is generally known.

In the invention, any of maleic acid, maleic acid anhydride, an unsaturated dicarboxylic acid such as fumaric acid or an anhydride thereof, a dicarboxylic acid salt which is derived therefrom may also be preferably used, in addition to the monomer represented by formula (V').

The preferable content of the repeating units having a hydrophilic group in the specific copolymer (g) may vary depending on the kind of the hydrophilic group, and it is preferable to control the content so that the specific copolymer (g) is water-soluble.

Here, the phrase "the specific copolymer (g) is water-soluble" means that the specific copolymer (g) can be dissolved in an amount of 3% by mass or more in water at 25°C.

The content of the repeating units (g-2) in the specific polymer (g) is preferably from 8% by mass to 25% by mass, more preferably from 10% by mass to 23% by mass, further preferably from 10% by mass to 20% by mass.

In a case where the content of the repeating units (g-2) is within the range described above, the polarity of the

specific copolymer (a) according to the invention can be appropriately maintained, and thus the preferable water resistance can be obtained.

The specific copolymer (g) may include only one kind of repeating unit (g-2) having a hydrophilic group or two or more kinds thereof.

(Repeating Unit (g-3) Having Hydrophobic Group)

The specific copolymer (g) may include a repeating unit (g-3) having a hydrophobic group. In a case where the specific copolymer (g) includes a repeating unit having a hydrophobic functional group, the polarity of the specific copolymer (g) may be appropriately maintained, and the ink image having excellent water resistance and excellent adhesion to a non-absorbable recording medium may be formed from the ink composition.

As the repeating unit (g-3) having a hydrophobic group, any repeating unit derived from a vinyl monomer can be used without any limitation, as long as a homopolymer that is formed of only the repeating unit (g-3) and that has a weight average molecular weight of 10,000 or more has a solubility in water of less than 1.0% by mass at 25°C. The repeating unit having a hydrophobic group is preferably a repeating unit derived from a monomer selected from the group consisting of alkyl esters of (meth)acrylic acid and aralkyl esters of (meth)acrylic acid.

In order to control the polarity of the specific copolymer (g) to an appropriate range, the hydrophobic group is preferably an alkyl group having from 5 to 22 carbon atoms, more preferably an alkyl group having from 8 to 22 carbon atoms, and further preferably an alkyl group having from 8 to 14 carbon atoms. In a case of the alkyl acrylate, the alkyl acrylate may be an ester having an alkyl group having from 4 to 19 carbon atoms, and is preferably an ester having an alkyl group having from 4 to 13 carbon atoms. In a case of the alkyl methacrylate, the alkyl methacrylate may be an ester having an alkyl group having from 4 to 18 carbon atoms, and is preferably an ester having an alkyl group having from 4 to 10 carbon atoms.

The alkyl group may be linear, may have a branched chain, or may be cyclic.

An aralkyl ester having, for example, a benzyl group or a phenoxyethyl group, may be used.

Examples of the repeating unit (g-3), which can be included in the specific copolymer (g), are exemplified below, but they are not limited thereto.

Examples of the repeating unit (g-3) include repeating units derived from a monomer selected from the group consisting of methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-hexyl (meth)acrylate, 2-ethyl hexyl (meth)acrylate, octyl (meth)acrylate, decyl (meth)acrylate, dodecyl (meth)acrylate, stearyl (meth)acrylate, and cyclohexyl methacrylate. Further, specific examples include a monomer selected from the group consisting of (meth)acrylic acid esters such as n-propyl methacrylate, isopropyl methacrylate, n-butyl (meth)acrylate, isobutyl (meth)acrylate, tert-butyl (meth)acrylate, n-hexyl (meth)acrylate, 2-ethyl hexyl (meth)acrylate, octyl (meth)acrylate, benzyl methacrylate, phenoxyethyl (meth)acrylate, tetrahydrofurfuryl (meth)acrylate and acetoacetoxyethyl (meth)acrylate; styrenes such as styrene, $\alpha$-methyl styrene and 4-methyl styrene; and vinyl ethers such as chloroethyl vinyl ether. The repeating unit(g-3) is preferably a repeating unit derived from a monomer selected from the group consisting of (meth)acrylic acid esters, which are substituted by an alkyl group having from 5 to 22 carbon atoms, such as n-propyl methacrylate, isopropyl methacrylate, n-butyl (meth)acrylate, isobutyl (meth)acrylate, tert-butyl (meth)acrylate, n-hexyl (meth)acrylate, 2-ethyl hexyl (meth)acrylate, octyl (meth)acrylate, decyl (meth)acrylate, dodecyl (meth)acrylate, stearyl (meth)acrylate and cyclohexyl methacrylate. The repeating unit(g-3) is more preferably a repeating unit derived from a monomer selected from the group consisting of n-propyl methacrylate, isopropyl methacrylate, n-butyl (meth)acrylate, isobutyl (meth)acrylate, tert-butyl (meth)acrylate, n-hexyl (meth)acrylate, 2-ethyl hexyl (meth)acrylate, octyl (meth)acrylate, benzyl methacrylate, and phenoxyethyl (meth)acrylate. The repeating unit(g-3) is particularly preferably a repeating unit derived from a monomer selected from the group consisting of n-butyl methacrylate, isobutyl methacrylate, tert-butyl (meth)acrylate, cyclohexyl methacrylate, isoboronyl methacrylate, 2-ethylhexyl methacrylate and phenoxyethyl (meth)acrylate.

In a case where the specific copolymer (g) includes a repeating unit (g-3), the specific copolymer (g) may include only one kind of repeating unit (g-3) or two or more kinds of repeating units (g-3).

From the viewpoint of reducing the polarity of the copolymer, in a case where the specific copolymer includes a repeating unit (g-3), the content of the repeating units (g-3) is preferably within a range of from 5% by mass to 72% by mass, more preferably from 20% by mass to 65% by mass, and most preferably from 25% by mass to 60% by mass.

(SP Value of Specific Copolymer (g))

The specific copolymer (g) has an SP value of preferably from 20.7 $MPa^{1/2}$ to 23.0 $MPa^{1/2}$, more preferably from 21.2 $MPa^{1/2}$ to 22.8 $MPa^{1/2}$, particularly preferably from 21.5 $MPa^{1/2}$ to 22.5 $MPa^{1/2}$.

Since the specific copolymer (g) includes a repeating units (g-1) having a partial structure represented by formula (I), both water resistance and solvent resistance can be easily attained by controlling the polarity. In a more

preferable embodiment, a white ink composition having superior adhesion to a recording medium can be obtained by controlling the polarity (the SP value) of the specific copolymer (g) to a specific range.

In the specific copolymer (g), the contents of the repeating units (g-1), the repeating units (g-2) having a hydrophilic group, and the repeating units (g-3) having a hydrophobic group, which may be included if necessary, are as described above, and it is preferable that they are selected in the preferable contents so that the SP value is within the preferable range described above and the total content of the repeating units is 100% by mass.

Table 1 shows specific examples of the specific copolymer (g) which can be used in the invention, and also shows the repeating units included in each examples of the specific copolymer (g) and the contents thereof based on mass, and the weight average molecular weight of each examples of the specific copolymer, but they are not limited thereto. The "SP value" described below is a SP value of a copolymer, which is obtained by the measurement method described above.

Table 1

| | (g-1) | | (g-2) | | | | | | (g-3) | | | | | |
|---|---|---|---|---|---|---|---|---|---|---|---|---|---|---|
| | Name | (%) | Name | (%) | Name | (%) | Name | (%) | Name | (%) | Name | (%) | Mw | SP Value ($MPa^{1/2}$) |
| G-1 | Monomer 1 | 50 | MAA | 9 | MAA-Na | 7 | | | BMA | 34 | | | 72300 | 22.3 |
| G-2 | Monomer 1 | 40 | MAA | 6 | MAA-Na | 6 | | | iBMA | 48 | | | 83500 | 21.2 |
| G-3 | Monomer 1 | 50 | MAA | 9 | MAA-Na | 7 | | | BMA | 24 | tBMA | 10 | 79400 | 22.2 |
| G-4 | Monomer 1 | 60 | MAA | 9 | MAA-Na | 7 | | | BMA | 24 | | | 61500 | 22.9 |
| G-5 | Monomer 1 | 40 | MAA | 9 | MAA-Na | 7 | | | tBMA | 44 | | | 45700 | 21.5 |
| G-6 | Monomer 1 | 60 | MAA | 9 | MAA-Na | 7 | | | BMA | 24 | | | 37600 | 22.2 |
| G-7 | Monomer 1 | 40 | MAA | 6 | MAA-Na | 6 | HEMA | 8 | tBMA | 40 | | | 96000 | 21.7 |
| G-8 | Monomer 1 | 40 | MAA | 6 | MAA-Na | 6 | HEAA | 8 | tBMA | 40 | | | 43000 | 22.5 |
| G-9 | Monomer 1 | 30 | MAA | 7 | MAA-Na | 7 | | | tBMA | 56 | | | 83000 | 20.8 |
| G-10 | Monomer 1 | 40 | MAA | 9 | MAA-Na | 7 | | | CyBMA | 44 | | | 70100 | 21.9 |
| G-11 | Monomer 1 | 40 | MAA | 9 | MAA-Na | 7 | | | BMA | 44 | PEMA | 24 | 72300 | 22.1 |
| G-12 | Monomer 1 | 60 | MAA | 9 | MAA-Na | 7 | | | tBMA | 24 | C18MA | 10 | 62000 | 22.1 |
| G-13 | Monomer 1 | 20 | MAA | 9 | MAA-Na | 7 | | | tBMA | 40 | PEMA | 24 | 83000 | 20.8 |
| G-14 | Monomer 1 | 70 | MAA | 6 | MAA-Na | 6 | | | tBMA | 18 | | | 73000 | 22.9 |
| G-15 | Monomer 1 | 40 | MAA | 9 | MAA-Na | 7 | | | IBOMA | 44 | | | 51900 | 21.6 |
| G-16 | Monomer 3 | 40 | MAA | 9 | MAA-Na | 7 | | | BMA | 44 | | | 46000 | 21.0 |
| G-17 | Monomer 1 | 50 | MAA | 9 | MAA-Na | 7 | | | BMA | 24 | tBMA | 10 | 53000 | 22.4 |
| G-18 | Monomer 1 | 50 | MAA | 9 | MAA-Na | 7 | | | BMA | 24 | BnMA | 10 | 71300 | 22.5 |
| G-19 | Monomer 1 | 38 | MAA | 2 | MAA-Na | 10 | | | tBMA | 50 | | | 38000 | 21.1 |
| G-20 | Monomer 1 | 50 | MAA | 6 | MAA-Na | 6 | | | tBMA | 38 | | | 11500 | 21.9 |
| G-21 | Monomer 1 | 50 | MAA | 9 | MAA-Na | 7 | | | EHMA | 14 | tBMA | 20 | 69800 | 22.1 |
| G-22 | Monomer 1 | 60 | MAA | 9 | MAA-Na | 7 | | | EHMA | 24 | | | 83800 | 22.6 |
| G-23 | Monomer 1 | 60 | MAA | 4 | MAA-Na | 8 | | | BMA | 28 | | | 61500 | 22.7 |
| G-24 | Monomer 2 | 40 | MAA | 9 | MAA-Na | 7 | | | BMA | 44 | | | 46500 | 21.2 |

The structural formulae and the abbreviations of Monomer 1 to Monomer 3 in Table 1 are as follows:

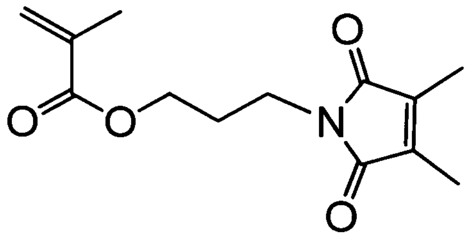

Monomer 1

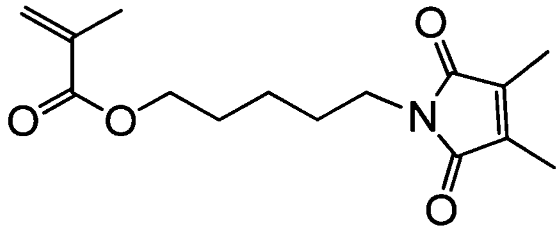

Monomer 2

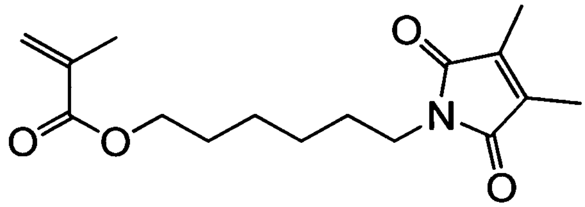

Monomer 3

MAA: Methacrylic acid (manufactured by Wako Pure Chemical Industries, Ltd.)
MAA-Na: Sodium salt of methacrylic acid (which is produced by copolymerizing methacrylic acid to obtain a polymer and neutralizing the resulting polymer)
BMA: n-Butyl methacrylate (manufactured by Wako Pure Chemical Industries, Ltd.)
iBMA: Isobutyl methacrylate (manufactured by Wako Pure Chemical Industries, Ltd.)
tBMA: tert-Butyl methacrylate (manufactured by Wako Pure Chemical Industries, Ltd.)
IBOMA: Isoboronyl methacrylate (manufactured by Wako Pure Chemical Industries, Ltd.)
C18MA: Octadecyl methacrylate (manufactured by Wako Pure Chemical Industries, Ltd.)
CyHMA: Cyclohexyl methacrylate (manufactured by Wako Pure Chemical Industries, Ltd.)
PEMA: Phenoxyethyl methacrylate (NK ester PHE-1G manufactured by Shin-Nakamura Chemical CO., Ltd.)
EHMA: 2-Ethylhexyl methacrylate (manufactured by Wako Pure Chemical Industries, Ltd.)
BnMA: Benzyl methacrylate (manufactured by Wako Pure Chemical Industries, Ltd.)

[Water]

The ink composition of the invention includes water.
The ink composition of the invention, accordingly, is an aqueous ink composition.
As the water used in the invention, it is preferable to use water including no ionic impurity such as deionized water and distilled water.
The content of water in the ink composition is appropriately selected according to the purpose, and the content of water is preferably from 10% by mass to 99% by mass, more preferably from 30% by mass to 90% by mass, further preferably from 30% by mass to 80% by mass, and particularly preferably from 50% by mass to 70% by mass, relative to the total amount of the ink composition.

[Water-Soluble Organic Solvent]

The ink composition of the invention may include at least one water-soluble organic solvent.
Examples of the water-soluble organic solvent include alkane diols (polyhydric alcohols) such as such as glycerol, ethylene glycol, and propylene glycol; sugar alcohols; alkyl alcohols having from 1 to 4 carbon atoms such as ethanol, methanol, butanol, propanol, and isopropanol; and glycol ethers such as ethyleneglycol monomethyl ether, ethyleneglycol monoethyl ether, ethyleneglycol monobutyl ether, ethyleneglycol monomethyl ether acetate, diethyleneglycol monomethyl ether, diethyleneglycol monoethyl ether, diethyleneglycol mono-n-propyl ether, ethyleneglycol mono-iso-propyl ether, diethyleneglycol mono-iso-propyl ether, ethyleneglycol mono-n-butyl ether, ethyleneglycol mono-t-butyl

ether, diethyleneglycol mono-t-butyl ether, triethyleneglycol monoethyl ether, 1-methyl-1-methoxybutanol, propyleneglycol monomethyl ether, propyleneglycol monoethyl ether, propyleneglycol mono-t-butyl ether, propyleneglycol mono-n-propyl ether, propyleneglycol mono-iso-propyl ether, dipropylene glycol, dipropyleneglycol monomethyl ether, dipropyleneglycol monoethyl ether, dipropyleneglycol mono-n-propyl ether, dipropyleneglycol mono-iso-propyl ether, and tripropyleneglycol monomethyl ether. They may be used alone or as a mixture of two or more kinds thereof.

As the water-soluble organic solvent, for example, known water-soluble organic solvents described in paragraphs [0124] to [0135] in JP-A No. 2011-074150, paragraphs [0104] to [0119] described in JP-A No. 2011-079901 may be used.

In a case where the ink composition of the invention includes a water-soluble organic solvent, the content is preferably 60% by mass or less, more preferably 40% by mass or less, relative to the total amount of the ink composition.

[Polymerization Initiator]

The ink composition of the invention may include at least one polymerization initiator.

In a case where the ink composition of the invention includes the water-soluble polymerizable compound, if the polymerization initiator is included, the polymerization of the specific (meth)acrylamide compound can be initiated by an active energy ray.

The polymerization initiator may be used singly or in combination of two or more kinds thereof. The polymerization initiator may be used together with a sensitizer.

As the polymerization initiator, a compound capable of initiating a polymerization reaction of a polymerizable compound by an active energy ray may be appropriately selected, and may be included. Examples of the polymerization initiator include polymerization initiators (for example, a photo-polymerization initiator) capable of generating an active species (radicals, acids, bases, and the like) by radial rays, light, or electron beam.

Examples of the photo-polymerization initiator include, for example, acetophenone, 2,2-diethoxyacetophenone, p-dimethylaminoacetophene, p-dimethylamino propiophenone, benzophenone, 2-chlorobenzophenone, p,p'-dichlorobenzophene, p,p'-bisdiethylaminobenzophenone, Michler's ketone, benzyl, benzoin, benzoin methyl ether, benzoin ethyl ether, benzoin isopropyl ether, benzoin n-propyl ether, benzoin isobutyl ether, benzoin n-butyl ether, benzyl dimethyl ketal, tetoramethyl thiuram monosulfide, thioxanthone, 2-chlorothioxanthone, 2-methyl thioxanthone, azobisisobutyronitrile, benzoin peroxide, di-tert-butyl peroxide, 1-hydroxycyclohexyl phenyl ketone, 1-[4-(2-hydroxyethoxy)-phenyl]-2-hydroxy-2-methyl-1-propane-1-one, 2-hydroxy-2-methyl-1-phenyl-1-one, 1-(4-isopropylphenyl)-2-hydroxy-2-methylpropane-1-one, methylbenzoyl formate, and the like. Further, they may include, for example, aromatic diazonium salts, aromatic halonium salts, aromatic sulfonium salts, and metallocene compounds, such as triphenyl sulfonium hexafluorophosphate, and diphenyliodoniumhexafluoroantimonate.

The content of the polymerization initiator in the ink composition is preferably from 1% by mass to 40% by mass, and more preferably from 5% by mass to 30% by mass, relative to the specific (meth)acrylamide compound described above (or relative to the total amount of the polymerizable compounds including the specific (meth)acrylamide compound in a case where a polymerizable compound other than the specific (meth)acrylamide compound is included). In a case where the content of the polymerization initiator is 1% by mass or more, the scratch resistance of the image is more improved, and thus it is advantageous in highspeed recoding, and in a case where the content is 40% by mass or less, the discharge stability becomes advantageous.

Examples of the sensitizer include amine compounds (examples thereof including aliphatic amines, aromatic group-containing amines, and piperidine); urea (examples thereof including aryl ureas, and o-tolyl thiourea); sulfur compounds (examples thereof including sodium diethyl dithiophosphate and soluble salts of an aromatic sulfinic acid); nitrile compounds (examples thereof including N,N,-disubstituted p-aminobenzonitrile); phosphorus compounds (examples thereof including tri-n-butyl phosphine, and sodium diethyldithiophosphide); nitrogen compounds (examples thereof including Michler's ketone, N-nitorosohydroxylamine derivatives, oxazolidine compounds, tetrahydro-1,3-oxadine compounds, and condensate of diamine with formaldehyde or acetoaldehyde); chlorine compounds (examples thereof including carbon tetrachloride, and hexachloroethane); polymerized amine of a reaction product of an epoxy resin and amine; and triethanol amine triacrylate.

The sensitizer can be included as long as the effects of the invention are not impaired.

[Hydrophilic Layered Clay Compound]

It is preferable that the ink composition of the invention further includes at least one hydrophilic layered clay compound.

The hydrophilic clay compound is a component capable of controlling viscosity of the ink composition, and in a case where the hydrophilic layered clay compound is included in the ink composition, the hydrophilic layered clay compound functions as a viscosity-controlling agent. In a case where the ink composition includes the hydrophilic layered

clay compound, the specific titanium dioxide in the ink composition may become less likely to be precipitated, and even if the specific titanium dioxide is precipitated, it can be easily re-dispersed.

Preferable examples of the hydrophilic layered clay compound include smectite clay minerals and hectorite clay minerals.

The smectite clay mineral is classified into a layered material, or a phyllosilicate of bentonite stone mineral. The smectite clay mineral is swellable. The smectite clay mineral undergoes some degree of intercalation or exfoliation.

Here, the term "intercalation" means to insert one or more foreign molecules or a part of a foreign molecule between small plate-like layers of a layered material, and it is usually detected according to an X-ray diffraction method, as shown in USP No. 5,891,611 specification (column 5, line 10 to column 7 line 23). The terms "exfoliation" means that small plates are separated and a disordered structure with no lamination order is formed.

The most preferable smectite clay mineral for the invention is a plate-like smectite clay mineral having a high aspect ratio. The smectite is classified into two subgroups based on the shape of the octahedron sheet thereof. A dioctahedral smectite mineral belongs to a montmorillonite subgroup. A trioctahedral smectite mineral belongs to a saponite subgroup. The montmorillonite subgroup include montmorillonite, nontronite, and beidellite. The saponite subgroup includes hectorite, saponite, and sauconite.

The smectite clay mineral may be a natural product or a synthetic product. This difference appears as a difference in the particle diameter and/or a level of impurity accompanied. Typically, the synthesized layered material has a small size in a transverse direction, and thus has a small aspect ratio. Since a synthesized layered material can be obtained as a material being more pure and having a narrower size distribution than natural clay, and thus further purification or separation is unnecessary for it.

The clay particles have a size of (from 0.2 nm to 3.0 nm) x (from 10 nm to 150 nm). The clay particles preferably have a size of (from 0.2 nm to 2.0 nm) x (from 10 nm to 125 nm). The obtained aspect ratio, i.e., a ratio of the maximum size to the minimum size, resulting from this layered material is from 10 to 150.

As the hydrophilic layered clay compound, any of commercially available products may be used, and which are marketed as a thixotropic agent, or the like.

Examples of a commercially available product of the layered clay mineral include LUCENTITE SWN (manufactured by Co-op Chemical Co., Ltd.), LUCENTITE SWF (manufactured by Co-op Chemical Co., Ltd.), LAPONITE RDS (available from Wilbur-Ellis Co., Ltd.), and the like.

The content of the hydrophilic layered clay compound in the ink composition is preferably 0.1 % by mass or more, more preferably 0.4% by mass or more, relative to the total mass of the ink composition, from the viewpoint of the precipitating property.

The content of the hydrophilic layered clay compound in the ink composition is preferably 3% by mass or less, relative to the total mass of the ink composition, more preferably 1.5% by mass or less, from the viewpoint of the discharge stability.

[Surfactant]

The ink composition of the invention may include at least one surfactant if necessary. The surfactant is used, for example, as a surface tension controlling agent.

As the surfactant, a compound having a structure, in which both of a hydrophilic moiety and a hydrophobic moiety exist in its molecule, can be effectively used, and any of an anionic surfactant, a cationic surfactant, an amphoteric surfactant, a nonionic surfactant of a betaine surfactant can be used. The water-soluble polymer (the polymer dispersant) described above may be used as a surfactant.

In the invention, from the viewpoint of suppressing ink droplet interference, the surfactant is preferably a nonionic surfactant, is more preferably an acetylene glycol derivative (acetylene glycol surfactant).

Examples of the acetylene glycol surfactant include alkyleneoxide adducts of 2,4,7,9-tetramethyl-5-decyne-4,7-diol or 2,4,7,9-tetramethyl-5-decyne-4,7-diol, and at least one compound selected therefrom is preferable. Examples of the commercially available product thereof E series of Nissin Chemical Co., Ltd, such as OLEFINE E 1010.

In a case where the ink composition includes a surfactant (surface tension controlling agent), the ink composition preferably includes the surfactant in an amount by which the surface tension of the ink composition can be controlled to a range of 20 mN/m to 60 mN/m, from the viewpoint of favorable discharging of the ink composition by an inkjet method, and the surface tension is more preferably from 20 mN/m to 45 mN/m, and further preferably from 25 mN/m to 40 mN/m.

In a case where the ink composition of the invention includes the surfactant, the amount of the surfactant is not specifically particularly limited, and the content of the surfactant is preferably 0.1 % by mass or more, more preferably from 0.1 % by mass to 10% by mass, and further preferably from 0.2% by mass to 3% by mass, relative to the total amount of the ink composition.

[Additional Component]

The ink composition of the invention can be formed using one or more additional additives other than the components described above. Examples of the additional additive include known additives, examples thereof including a polymerization inhibitor, a drying inhibitor (a wetting agent), a fading inhibitor, an emulsion stabilizer, a penetration enhancer, an ultraviolet absorber, a preservative, an anti-fungal agent, a pH-controlling agent, a surface tension-controlling agent, an anti-foaming agent, a viscosity-controlling agent, a dispersion stabilizer, a corrosion inhibitor, and a chelating agent. Such an additional additive may be directly added to an ink in a case of the ink composition, or in a case where an oily dye is used in a dispersion state, in general, the additional additive may be added to the dispersion after preparation of the dye dispersion. The additional additive may be added to an oily phase or an aqueous phase at the time of preparing the dispersion.

[Preferable Physical Properties of Ink Composition]

In the invention, the surface tension (25°C) of the ink composition is not particularly limited, and it is preferably from 20 mN/m to 60 mN/m. The surface tension is more preferably from 20 mN/m to 45 mN/m, further preferably from 25 mN/m to 40 mN/m. The surface tension of the ink composition is measured using an Automatic Surface Tensiometer CBVP-Z (manufactured by Kyowa Interface Science Co., Ltd.) under a condition of 25°C.
In the invention, the viscosity of the ink composition is not particularly limited, and the viscosity at 25°C is preferably from 1.2 mPa·s to 15.0 mPa·s, more preferably from 2 mPa·s to less than 13 mPa·s, further preferably from 2.5 mPa·s to less than 10 mPa·s. The viscosity of the ink composition is measured using a VISCOMETER TV-22 (manufactured by TOKI SANGYO CO. LTD.) under a condition of 25°C.
In the invention, the pH of the ink composition is not particularly limited, and the pH is preferably from 7.5 to 10, and more preferably from 8 to 9, from the viewpoint of the ink stability and the aggregation speed. The pH of the ink composition is measured at 25°C using a pH measuring apparatus usually used (for example, a multi-function water quality meter MM-60R manufactured by DKK-Toa Corporation).
The pH of the ink composition can be appropriately controlled using an acidic compound or a basic compound. As the acidic compound or the basic compound, any compound which is usually used can be used without particular limitations.

<Ink Set>

The ink composition of the invention may be used together with a treatment liquid including an aggregating component which aggregates the components in the ink composition, and the ink composition of the invention and the treatment liquid may be included in an ink set.
The ink set of the invention, accordingly, includes at least one ink composition of the invention described above, and at least one treatment liquid including the aggregating component, which aggregates the components in the ink composition of the invention.
In a case where an image is formed using the ink composition together with the treatment liquid, the speed of the inkjet recoding can be accelerated, and even if the recording is performed in a high speed, a high quality image having high density and high resolution (for example, excellent reproducibility of thin lines and fine parts) can be obtained.
In image formation using a treatment liquid, the image is generally formed aggregating a pigment in an ink composition, and thus gloss unevenness tends to easily occur. For this reason, in the image formation using the treatment liquid, the effect for inhibiting the gloss unevenness, according to the invention, can be further effectively exerted.
Further, in the image formation using the treatment liquid, the viscosity of the ink composition, which has been in the course of drying, ,may be remarkably increased by the effect caused mainly by the specific (meth)acrylamide compound included in the ink composition, as described above.

[Treatment Liquid]

The treatment liquid includes at least one aggregating component which aggregates the component in the ink composition.
The aggregating component forms aggregates as a result of contacting with the ink composition.
The aggregating component may be a compound capable of changing a pH of the ink composition, a polyvalent metal salt, or a cationic polymer. In the invention, the aggregating component is preferably a compound capable of changing the pH of the ink composition, and more preferably a compound capable of decreasing the pH of the ink composition, from the viewpoint of ink composition aggregating performance.
Examples of the compound capable of decreasing the pH of the ink composition include acids (acidic substances).

Preferable examples of the acid may include sulfuric acid, hydrochloric acid, nitric acid, phosphoric acid, polyacrylic acid, acetic acid, glycolic acid, malonic acid, malic acid, maleic acid, ascorbic acid, succinic acid, glutaric acid, fumaric acid, citric acid, tartaric acid, lactic acid, sulfonic acid, ortho-phosphoric acid, pyrrolidone carboxylic acid, pyrrone carboxylic acid, pyrrole carboxylic acid, furan carboxylic acid, pyridine carboxylic acid, coumaric acid, thiophene carboxylic acid, nicotinic acid, derivatives of any of these compounds, and salts thereof.

The acid may be used singly or in combination of two or more kinds thereof.

In a case where the treatment liquid includes the acid, the treatment liquid preferably has a pH (25°C) of 6 or less, more preferably 4 or less, further preferably from 1 to 4, and particularly preferably from 1 to 3. At this time, the ink composition preferably has a pH (25°C) of 7.5 or more (more preferably 8.0 or more).

It is preferable that the ink composition has a pH (25°C) of 8.0 or more and the treatment liquid has a pH (25°C) of 0.5 to 4, from the viewpoint of the image density, the resolution, and the acceleration of the inkjet recording speed.

In the invention, the aggregating component is preferably an acid having high water-solubility. From the viewpoint of enhancing aggregation performance and fixing the entire ink, the aggregating component is preferably an organic acid, more preferably a bi- or higer valent organic acid, and particularly preferably a bivalent or trivalent acidic substance. The bi- or higher valent organic acid is preferably an, organic acid whose first pKa is 3.5 or less, and more preferably an organic acid whose first pKa is 3.0 or less. Preferable examples of the organic acid include phosphoric acid, oxalic acid, malonic acid, and citric acid.

Examples of the polyvalent metal salt and examples of the cationic polymer, each of which can be used as the aggregating component, include polyvalent metal salts and cationic polymers described in paragraphs [0155] and [0156] in JP-A No. 2011-042150.

The aggregating component may be used singly, or in combination of two or more kinds thereof.

The content of the aggregating component in the treatment liquid is preferably from 1% by mass to 50% by mass, more preferably from 3% by mass to 45% by mass, and further preferably from 5% by mass to 40% by mass.

The treatment liquid may include at least one polymerization initiator. Examples of the polymerization initiator which may be included in the treatment liquid include those described for the polymerization initiator in the ink composition and preferable range of the polymerization initiator are the same as those described for the polymerization initiator in the ink composition.

The treatment liquid may further include one or more other additives as additional components as long as the effects of the invention are not impaired. Examples of the additive include known additives such as a drying inhibitor (a wetting agent), a fading inhibitor, an emulsion stabilizer, a penetration enhancer, an ultraviolet absorber, a preservative, an anti-fungal agent, a pH-controlling agent, a surface tension-controlling agent, an anti-foaming agent, a viscosity-controlling agent, a dispersant, a dispersion stabilizer, a corrosion inhibitor, and a chelating agent.

<Image-Forming Method>

In the invention, the image-forming method includes at least an ink-application process in which the ink composition of the invention is applied onto a recording medium by an inkjet method to form an image.

From the viewpoint of increasing fixability of the ink composition of the invention onto the recording medium, it is preferable that the image-forming method further includes a treatment liquid application process in which the treatment liquid including an aggregating component, which aggregates the component in the ink composition, is applied to the recording medium; and a drying process in which an image (a white image) after the treatment liquid-application process and the ink-application process is dried.

The image-forming method in the invention may further include one or more other processes if necessary. For example, the method may include a colored image-forming process in which a coloring ink composition having a color other than white is applied on the white image to form a colored image.

According to the image-forming method of the invention, the image (white image) having superior rubbing resistance can be formed. In a case where the image-forming method of the invention includes the colored image-forming process, the color (second color) density of the colored image can be increased.

[Ink-application Process]

An ink-application process is a process in which the ink composition of the invention described above is applied to a recording medium, for example, by an inkjet method.

In a case where the image-forming method of the invention includes the colored image-forming process as described below, the process in which the ink composition of the invention is applied to the recording medium, for example, by an inkjet method is a first ink-application process.

In the ink-application process, the ink composition can be applied selectively to the recording medium, and a

desired visible image can be formed. The details of the ink composition such as the details and preferable embodiments of the ink composition are as described in the description about the ink composition.

Recording of images utilizing the inkjet method can be specifically performed by applying energy, thereby discharging a liquid composition on a desired recording medium, i. e., a plain paper, a resin coated paper, for example, an inkjet paper described in JP-A Nos. H 8-169172, H 8-27693, H 2-276670, H 7-276789, H 9-323475, S 62-238783, H 10-153989, H 10-217473, H 10-235995, H 10-337947, H 10-217597, and H 10-337947, ot the like, a film, a paper common to electrophotography and inkjet, a fabric, a glass, a metal, a ceramic, or the like. The methods described in paragraphs [0093] to [0105] in JP-A No. 2003-306623 can be applied as a preferable inkjet recording method in the invention.

The inkjet method is not particularly limited, and any known method may be used, for example, a charge controlling method in which an ink is discharged utilizing electrostatic attraction; a drop-on-demand method (a pressure pulse method) utilizing a vibratory pressure of piezoelectric element; an acoustic inkjet method in which electric signals are converted into acoustic beams, which are irradiated to an ink, and the ink is discharged utilizing a radiation pressure; and a thermal inkjet inkjet (BUBBLE JET) method utilizing a pressure generated by bubbles formed by heating an ink, and the like. As the inkjet method, an inkjet method described in JP-A No. S 54-59936 can be particularly effectively utilized, in which an ink to which an action of heat energy has been applied causes sharp volume change, and an ink is discharged from nozzles by the force caused by the state change.

Examples of the inkjet method include a method in which a large number of droplets of an ink having a small volume and a low density, called as a photo ink, are ijected; a method in which multiple inks having substantially the same color phase but different density are used to improve an image quality; and a method using a colorless and transparent ink.

An inkjet head used in the inkjet method may be an on-demand method or a continuous method. Specific examples of a discharging method include electromechanical conversion methods (for example, a single cavity type, a double cavity type, a bender type, a piston type, a share mode type, a sheared wall type, and the like); electricity-heat conversion methods (for example, a thermal inkjet type, a BUBBLE JET type, and the like); electrostatic suction methods (for example, an electric field control type, a slit-jet type, and the like), and electrical discharge methods (for example, a spark jet type, and the like), and any discharging method may be used.

The ink nozzle used in the recording by the inkjet method is not particularly limited, and it can be appropriately selected according to the purpose.

Specific examples of the inkjet recording method include the methods as described below.

There is an inkjet recording method, called as (1) an electrostatic suction method. The electrostatic suction method is a method in which an intense electric field is applied to between a nozzle and an accelerating electrode disposed in front of the nozzle, ink liquid droplets are continuously ejected from the nozzle, printing information signals are provided to deflecting electrodes while the ink droplets are passing through deflecting electrodes, thereby sending the ink droplets toward a recording medium, and the ink is fixed onto the recording medium to record an image, or a method in which the ink droplets are ejected from the nozzle toward the recording medium according to the printing information signals, without the deflection of the ink droplets, and the image is fixed onto the recording medium to perform recording.

There is also a method (2) in which a pressure is applied to ink liquid by a small pump and, at the same time, an inkjet nozzle is mechanically vibrated by a quartz vibrator, or the like, thereby forcibly ejecting ink droplets from a nozzle. The ink droplets ejected from the nozzle are charged at the same time when they are ejected, printing information signals are provided to deflecting electrodes while these ink droplets are passing through deflecting electrodes, and the ink droplets are sent to the recording medium, thereby recording an image on a recording medium.

There is a method (3) in which a pressure and printing information signals are applied to ink liquid at the same time by a piezoelectric element, ink droplets are ejected from a nozzle toward a recording medium, and an image is recorded on the recording medium (piezo method), and there is also a method (4) in which ink liquid is heated and foams according to printing signal information using microelectrodes, the ink liquid is ejected from a nozzle toward a recording medium by expanding the foams, and an image is recorded on the recording medium (BUBBLE JET (registered mark) method).

For the inkjet head, there is a shuttle method in which recording is performed while the head is scanned in a width direction of a recording medium, using a short length serial head, and a line method in which a line head having recording elements arranged on a line corresponding to the entire length of one side of a recording medium is used. According to the line method, the recording medium is scanned in a direction rectangular to the arranging direction of the recording elements, whereby an image can be recorded on a whole area of the recording medium, and a carrying system such as a carriage scanning the short length head is not needed. In addition, a complicated scan control between the moving carriage and the recording medium is not needed and only the recording medium is moved, and thus the further acceleration of the recording speed can be realized compared to the shuttle method. Although the image-forming method in the invention is applicable to any of both methods, effects of improving discharge accuracy and rubbing

resistance of the image may be enhanced in a case where the method is applied to the line method in which dummy jet is not generally performed.

The amount of a liquid droplet discharged from the inkjet head is preferably from 1 p1 (picoliter) to 10 p1, more preferably from 1.5 p1 to 6 p1, from the viewpoint of obtaining a high definition image. From the viewpoint of improving the image unevenness and the connection of continuous tone, it is effective to combine amounts of the liquid droplets different from each other, and the invention can also be preferably used in such a case.

[Treatment Liquid-Application Process]

The treatment liquid-application process is a process in which the treatment liquid including the aggregating component, which aggregates the component in the ink composition described above is applied to the recording medium.

The treatment liquid is as described above, and preferable ranges are also as described above.

In this process, the treatment liquid applied to the recording medium is brought into contact with the ink composition which has been applied to the recording medium in the previous ink-application process to form an image. In this case, the dispersed particles such as the pigment in the ink composition are aggregated to fix an image on the recording medium.

The treatment liquid can be applied by applying a known method such as a coating method, an ink jetting method or an immersing method. The coating method can be performed by a known coating method using a bar coater, an extrusion die coater, an air-doctor coater, a blade coater, a rod coater, a knife coater, a squeezing coater, reverse roll coater, or the like. Details of the inkjet method are as described above.

The treatment liquid-application process may be conducted before or after the ink-application process using the ink composition.

In the invention, in an embodiment the ink-application process is preferably conducted after the treatment liquid-application process. In other words, it is preferable that the ink-application process is conducted after the treatment liquid-application process, and thus the ink composition is applied to the treatment liquid which has been applied on the recording medium in the treatment liquid-application process. Specifically, in an embodiment, it is preferable that the treatment liquid is previously applied before the ink composition is applied to the recording medium, and the ink composition is applied so that the ink composition is brought into contact with the treatment liquid which has been applied to the recording medium to form an image. This can accelerate the inkjet recording speed, and the image having high density and resolution can be obtained even if the high speed recording is performed.

The amount of the treatment liquid applied is not particularly limited in the treatment liquid-application process, so long as the ink composition can be aggregated. The amount of the treatment liquid may preferably be set so that an amount of the aggregating component applied is 0.1 g/m$^2$ or more. The amount of the aggregating component applied is preferably from 0.2 g/m to 0.7 g/m$^2$. In a case where the amount of the aggregating component applied is 0.1 g/m$^2$ or more, favorable aggregation performance at a high speed can be maintained according to any of various embodiments used of the ink composition. The amount of the aggregating component applied of 0.7 g/m$^2$ or less is preferable from the viewpoint of suppressing since unfavorable influences (change in gloss, and the like) exerted on the surface property of the recording medium.

In the invention, it is preferable that after the treatment liquid-application process, the ink-application process is conducted, and that a heat-drying process in which the treatment liquid on the recording medium is heated and dried is further conducted during a period from after the application of the treatment liquid onto the recording medium to the application of the ink composition. In a case where the treatment liquid is previously heated and dried before the ink-application process, the ink-colorability such as bleeding prevention can be improved and a visible image having favorable color density and color phase can be recorded.

The heat-drying can be performed by any known heating means such as a heater, air-blowing means utilizing air-blowing such as a dryer, or a combination thereof. Examples of the heating method include a method in which heat is applied by a heater from a surface of the recording medium opposite to a surface on which the treatment liquid is applied; a method in which warm or hot air is applied to a surface of the recording medium on which the treatment liquid is applied; and a heating method using an infrared heater. The heating may be performed by any combination thereof.

[Drying Process]

In the invention, the drying process is a process in which the image after the image ink-application process and the treatment liquid-application process or the image after the ink-application process is dried.

In the drying process, at least a part of water in the image (the ink composition) formed on the recording medium is dried and removed. The drying process is provided before a curing process described below, and the water content of the ink composition is reduced, whereby the curing reaction of the polymerizable compound may be well advanced in the curing process. In particular, in a case where the image is formed at a high speed, for example, the image is

formed in a single pulse method in which an ink is discharged in a main scanning direction and one line is formed by one scanning, a sensitivity capable of making an image forming property can be secured.

For example, the effects of the invention can be further enhanced in a case where the carrying speed of the recording medium at 100 mm/s to 3000 mm/s in the image forming, and further in a case where the carrying speed is set at 150 mm/s to 2700 mm/s, more preferably at 250 mm/s to 2500 mm/s, the effects of improving adhesion and scratch resistance obtained by providing the drying process, may be further enhanced.

In the drying process in the invention, it is not necessary to completely remove water, and water may remain in the image or in a pigment layer. It is preferable that in the drying process, the drying is performed to the extent that water may remain within a range where the UV curing reaction is not impaired.

In the drying process, it is preferable that at least a part of water included in the ink composition applied onto the recording medium in the ink-application process described above is removed in a drying condition (hereinafter referred to as a "drying amount") in which 60% by mass to 80% by mass of water included in the ink composition (the image), which is applied in the maximum applied amount, is removed. In a case where the amount of the water removed is 60% by mass or more, cockling can be suppressed and favorable adhesion of the image can be maintained. In a case where the amount of the water removed is 80% by mass or less, the adhesion of the image is favorable.

The drying condition may be decided based on the maximum amount of the ink composition applied in the ink-application process, which is appropriately provided if necessary. In a case where water in the ink composition including a pigment is removed under such a drying condition, the occurrence of cockling can be suppressed, and an image having favorable adhesion can be obtained.

The drying amount in the drying process can be calculated as follows. An amount $W_0$ of water included in an image formed using the maximum amount of the ink applied and not conducting the drying process, and an amount $W_1$ of water included in an image formed using the maximum amount of the ink applied and conducting the drying process using a predetermined drying condition are measured. Then, a ratio of a difference between $W_0$ and $W_1$ to $W_0$, (($W_0$ - $W_1$)/$W_0$ $\times$ 100[% by mass]) is obtained, whereby a drying amount (% by mass), which is an amount of water removed in the drying process, is calculated.

The amount of water included in the image is measured in a Carl Fisher method. In the invention, a water amount, measured using a Carl Fisher moisture meter MKA-520 (manufactured by Kyoto Electronics Manufacturing Co., Ltd.) in usual measuring conditions, is applied to the amount or water.

The amount (drying amount) of water in the ink composition, which is removed in the drying process, is preferably from 60% by mass to 80% by mass, more preferably from 65% by mass to 80% by mass, and further preferably from 70% by mass to 80% by mass, relative to the total water amount in the ink composition applied in the maximum applied amount of 15 $m^1/m^2$ or less, from the viewpoint of maintaining curing efficiency after drying at a favorable level.

It is also preferable that drying is started within 5 seconds from the time point at which the impact of the liquid droplets of the ink composition to the recording medium is completed in the ink-application process. Here, the phrase "drying is started within 5 seconds from the time point at which the impact is completed" means that air-blowing or heat application to the image formed of the ink droplets starts within 5 seconds from the time point at which the impact of the ink droplets is completed. For example, the drying starts within 5 seconds from the time point at which the impact is completed by carrying the recording medium to a drying area within 5 seconds from the time point at which the impact of the ink droplets is completed.

The time period from the time point at which the impact of the ink droplets is completed to the starting of drying is more preferably within 3 seconds or less.

The drying can be performed, for example, by means of heating by a heating unit such as a nichrome wire heater; means of air-blowing utilizing a dryer, or any combination thereof.

Examples of the heating method include a method in which heat is applied by a heater from a side of the recording medium opposite to a side on which the image is formed; a method in which warm or hot air is applied to a surface of the recording medium on which the image is formed; a heating method using an infrared heater. The heating may be performed by any combination thereof.

[Curing Process]

In the invention, it is preferable that the image-forming method includes, after the drying process described above (the process of drying the image after the treatment liquid-application process and the ink-application process), a curing process in which active energy ray is irradiated to the ink composition which has been applied onto the recording medium in the ink-application process, in the dried image, to cure the ink composition.

Examples of active energy ray used herein include $\alpha$-ray, $\gamma$-ray, electron beam, X-ray, ultraviolet ray, visible rays of light, and infrared light. Of these the ultraviolet ray is preferable.

In the curing process, a monomer component (polymerizable compounds) in the image can be surely polymerized and cured. The whole image can be cured in a case where a light source for irradiating active energy ray is

disposed so as to face the recorded surface of the recording medium, and irradiates the rays to the whole recorded surface. As the light source for irradiating the active energy ray, an ultraviolet irradiating lamp, a halogen lamp, a high-pressure mercury lamp, a laser, an LED, an electron beam irradiator, or the like may be used.

Although the curing process may be conducted at least after the ink-application process, it is preferable that the curing process is conducted after the ink-application process and the treatment liquid-application process.

The irradiation condition of the active energy ray is not particularly limited so long as the polymerizable compound can be polymerized and cured. For example, a wavelength of the active energy ray is preferably from 200 nm to 600 nm, more preferably from 300 nm to 450 nm, and further preferably from 350 nm to 420 nm.

An output of the active energy ray is preferably 5000 mJ/cm$^2$ or less, more preferably from 10 mJ/cm$^2$ to 4000 mJ/cm$^2$, and further preferably from 20 mJ/cm$^2$ to 3000 mJ/cm$^2$.

[Colored Image-Forming Process]

The colored image-forming process is a process in which a coloring ink composition having a color other than white is applied to the image (white image), which is formed through the first ink-application process, the optional treatment liquid-application process, which is performed as necessary, and the optional drying process, which is performed as necessary.

The colored image-forming process may be, for example, a process including a second ink application process of applying an ink composition to the recording in the same manner as in the first ink application method except that instead of the ink composition of the present invention, an ink composition including a colorant (at least one of a dye or a pigment) other than a white pigment, such as carbon black, is used.

From the viewpoint of obtaining fixability of the colored image on the white image, it is preferable that the colored image-forming process further includes a treatment liquid-application process, a drying process, and a curing process.

The treatment liquid-application process, the drying process and the curing process in the colored image-forming process each of which may be included in the colored image-forming process are performed in the same manner as in the treatment liquid-application process, the drying process and the curing process which are performed using the ink composition of the invention.

[Recording Medium]

The image-forming method in the invention is a method for recording an image on a recording medium. The recording medium is not particularly limited, and general printing paper mainly including cellulose, used in an offset printing usually used, such as a so-called high-quality paper, coated paper or art paper may be used. For general printing paper mainly including cellulose, absorption and drying of the ink is comparatively slow, the color material easily moves after dropping of the ink composition, and the image quality is easily deteriorated, in the image recording in a general inkjet method using an aqueous ink. According to the image-forming method in the invention, however, the movement of the color material can be suppressed, and the high quality image having high color density and excellent hue can be recorded.

As the recording medium, any of general commercial products may be used. Examples thereof include high-quality paper (A) such as "OK PRINCE WOOD FREE" manufactured by Oji Paper Co., Ltd., "SHIRAOI" manufactured by Nippon Paper Industries Co., Ltd., and "New NPI HIGH-QUALITY" manufactured by Nippon Paper Industries Co., Ltd.; very light weight coated paper such as "OK EVERLIGHT COATED" manufactured by Oji Paper Co., Ltd., and "AURORA S" manufactured by Nippon Paper Industries Co., Ltd.; lightweight coated paper (A3) such as "OK COAT L" manufactured by Oji Paper Co., Ltd. and "AURORA L" manufactured by Nippon Paper Industries Co., Ltd.; coated paper (A2, B2) such as "OK TOP COAT PLUS" manufactured by Oji Paper Co., Ltd. and "AURORA COAT" manufactured by Nippon Paper Industries Co., Ltd.; art paper (A1) such as "OK GOLDEN CASK GLOSS+" manufactured by Oji Paper Co., Ltd. and "TOKUBISHI ART" manufactured by Mitsubishi Paper Mills Limited, and the like. It is also possible to use various exclusive papers for photographs, which are used in inkjet recording.

Of the recording media, the coated paper, which is used in the general offset printing, is preferable. The coated paper is paper in which a surface of high-quality paper or neutral paper, which mainly includes cellulose and whose surface is not generally subjected to a surface treatment, is coated with a coating material to provide a coated layer. In an image formation according to a usual aqueous inkjet method, the coated paper easily causes quality problems such as the gloss or scratch resistance of the image. According to the image-forming method in the invention, however, the image in which gloss unevenness is suppressed and which has favorable gloss and rubbing resistance can be obtained. It is particularly preferable to use a coated paper including a base paper and a coated layer including an inorganic pigment, and it is more preferable to use a coated paper including a base paper and a coated layer including kaolin and/or calcium bicarbonate. Specifically, the recording medium is further preferable an art paper, a coated paper, light weight coated paper or a very light weight coated paper.

EXAMPLES

The invention is explained in more detail by Examples below, but the invention is not limited to the following Examples to the extent of not departing from the scope of the invention. "Parts" and "%" are on a mass basis unless otherwise indicated.

In the following, the average particle diameter of self-dispersing resin particles was obtained by measuring a volume average particle diameter using a NANOTRAC particle size distribution analyzer UPA-EX150 (manufactured by NIKKISO CO., LTD.) according to a dynamic light scattering method.

The average primary particle diameter of titanium dioxide was obtained as an arithmetic average value which was obtained by directly photographing titanium dioxide particles at a magnification of 10,000 to 100,000 by an electron microscopy (using an electron microscope JEM-1200 FX manufactured by JEOL Ltd.), observing and measuring sizes of the particles from an image photographed, and measuring sizes of 1000 particles. The particle diameter was calculated from a circle equivalent diameter, i.e., a diameter of a circle having the same area as that of a particle photographed.

<Preparation of Ink>

[Preparation of Titanium Dioxide Dispersion 1]

A mixture was obtained by mixing 24 parts of titanium dioxide (R-630 having an average primary particle diameter of 0.24 μm, manufactured by Ishihara Sangyo Kaisha, Ltd.), 4.3 part of DISPERBYK-2015 (an acrylic copolymer obtained in a control polymerization, a non-volatile content of 40% by mass, and an acid value of 10 mgKOH/g, manufactured by BYK Japan KK), and 91.7 parts of deionized water. The obtained mixture was dispersed for 4 hours at 1000 rpm in a Ready Mill disperser (manufactured by IMEX Co., Ltd.) using zirconia beads having a particle diameter of 0.5 mmϕ, to obtain titanium dioxide dispersion 1. The titanium dioxide had a volume average secondary particle diameter of 310 nm.

[Synthesis of Self-Dispersing Resin Particles P-1]

To a 2 liter three-necked flask equipped with a stirrer, a thermometer, a reflux condenser and a nitrogen gas-introducing tube, 360.0 g of methyl ethyl ketone were placed, and the temperature was elevated to 75°C. After that, a mixed solution of 151.2 g of benzyl methacrylate, 172.8 g of methyl methacrylate, 36.0 g of methacrylic acid, 72 g of methyl ethyl ketone, and 1.44 g of "V-601" (manufactured by Wako Pure Chemical Industries, Ltd.) was added dropwise thereto at a constant speed so that the addition was completed in 2 hours, while the temperature inside the flask was kept at 75°C. After the addition was completed, a solution of 0.72 g of "V-601" and 36.0 g of methyl ethyl ketone was added thereto, and the mixture was stirred at 75°C for 2 hours. Then, a solution of 0.72 g of "V-601" and 36.0 g of isopropanol was further added thereto, and the mixture was stirred at 75°C for 2 hours. After that, the temperature was elevated to 85°C, and the stirring was continued for further 2 hours to obtain a polymer solution of a benzyl methacrylate/methyl methacrylate/methacrylic acid (=42/48/10 [a mass ratio]) copolymer.

The obtained copolymer had a weight average molecular weight (Mw), measured in the same manner as above, of 58000 (calculated according to a gel permeation chromatography (GPC) in terms of polystyrene), and an acid value of 32.6 mg KOH/g.

Next, 668.3 g of the obtained polymer solution was weighed, to which 388.3 g of isopropanol and 145.7 ml of a 1 mol/L aqueous NaOH solution were added, and the temperature inside the reaction vessel was elevated to 80°C. Next, 720.1 g of distilled water was added dropwise thereto at a speed of 20 ml/min and water-dispersion was performed. After that, the temperature inside the reaction vessel was kept at 80°C for 2 hours, 85°C for 2 hours, and 90°C for 2 hours under atmospheric pressure. Subsequently, the pressure inside the reaction vessel was reduced, and the isopropanol, methyl ethyl ketone and distilled water were distilled away in a total amount of 913.7 g to obtain an aqueous dispersion of self-dispersing resin particles P-1, having a solid concentration (a self-dispersing resin particles concentration) of 28.0% by mass. The volume average particle diameter of self-dispersing resin particles P-1 was 15 nm.

Among the constituent components (structural unit) of self-dispersing resin particles P-1, the constituent component (structural unit) derived from benzyl methacrylate, the constituent component (structural unit) derived from methyl methacrylate, and the constituent component (structural unit) derived from methacrylic acid may also be referred to as "constituent component A", "constituent component B", and "constituent component C", respectively.

A mass ratio of constituent component A, constituent component B and constituent component C [the mass of constituent component A / the mass of constituent component B / the mass of constituent component C] may also be hereinafter referred to as a mass ratio [A/B/C] of the constituent components.

The glass transition temperature (Tg) of the obtained self-dispersing resin particles P-1 was measured according to a method described below, and it was found that the glass transition temperature Tg of self-dispersing resin particles

P-1 was 90°C.

-Measurement of Glass Transition Temperature (Tg)-

An aqueous dispersion of self-dispersing resin particles having a solid amount of 0.5 g was dried at 50°C for 4 hours under reduced pressure to obtain a polymer in a solid state. Using the obtained solid polymer, the glass transition temperature Tg was measured using a differential scanning calorimeter (DSC) EXSTAR 6220, manufactured by SII Nano Technology Inc.

As the measurement conditions, 5 mg of a sample was sealed in an aluminum pan, and a peak top value of DSC measurement data at a second temperature elevation in the following temperature profile, measured in a nitrogen atmosphere, was defined as the Tg.

30°C → -50°C (cooling at 50°C/minute)
-50°C → 120°C (rising temperature at 20°C/minute)
120°C → -50°C (cooling at 50°C/minute)
-50°C → 120°C (rising temperature at 20°C/minute)

[Preparation of White Ink Compositions 1 to 6 and White Ink Compositions 101 and 102]

White ink compositions 1 to 6 of Examples 1 to 6 respectively, and white ink compositions 101 and 102 of Comparative Examples 1 and 2 respectively were prepared as shown below.

Preparation of White Ink Composition 1

The following components were mixed, and the mixture was passed through a filter manufactured by EMD Millipore Corporation (a PVDF film having a pore size of 5 μm) to obtain a white ink composition 1.

-Composition of White Ink Composition 1-

- Titanium dioxide dispersion 1 (concentration of titanium dioxide: 20% by mass) 50.0% by mass
- SANNIX GP250 [a hydrophilic organic solvent manufactured by Sanyo Chemical Industries, Ltd.] 10.0% by mass
- OLFINE E1010 [a surfactant manufactured by Nissin Chemical Co., Ltd.] 1.0% by mass
- Self-Dispersing Resin Particles P-1 (solid content) 2.0% by mass
- Deionized water the remainder (the remainder so that the total amount was 100.0% by mass)

Preparation of White Ink Composition 2 (for reference) and White Ink Compositions 101 and 102

White ink composition 2 not falling under the scope of the present invention and white ink compositions 101 and 102 were prepared in the same manner as in the preparation of white ink composition 1, except that self-dispersing polymer particles P-2, self-dispersing polymer particles P-3 or self-dispersing polymer particles P-4 were used instead of self-dispersing polymer particles P-1, as shown in Table 2.

Self-dispersing polymer particles P-2, P-3, and P-4 were produced as follows.

- Synthesis of Self-Dispersing Polymer Particles P-2-

To a 2 liter three-necked flask equipped with a stirrer, a thermometer, a reflux condenser and a nitrogen gas-introducing tube, 360.0 g of methyl ethyl ketone were placed, and the temperature was elevated to 75°C. A mixed solution of 180.0 g of phenoxyethyl methacrylate, 158.4 g of isobutyl methacrylate, 21.6 g of methacrylic acid, 72 g of methyl ethyl ketone, and 1.44 g of "V-601" (manufactured by Wako Pure Chemical Industries, Ltd.) was added dropwise thereto at a constant speed so that the addition was completed in 2 hours, while the temperature inside the reaction vessel was kept at 75°C. After the addition was completed, a solution of 0.72 g of "V-601" and 36.0 g of methyl ethyl ketone was added thereto, and the mixture was stirred at 75°C for 2 hours. Then, a solution of 0.72 g of "V-601" and 36.0 g of isopropanol was further added thereto, and the mixture was stirred at 75°C for 2 hours. After that, the temperature was elevated to 85°C, and the stirring was continued for further 2 hours. The obtained copolymer had a weight average molecular weight (Mw) of 65000 (measured using a gel permeation chromatography (GPC) and calculated in terms of polystyrene. Columns used were TSKgel SuperHZM-H, TSKgel SuperHZ4000, and TSKgel SuperHZ200 (manufactured

by Toso Corporation)).

Next, 668.3 g of the obtained polymer solution was weighed, to which 388.3 g of isopropanol and 145.7 ml of a 1 mol/L aqueous NaOH solution were added, and the temperature inside the reaction vessel was elevated to 80°C. Next, 720.1 g of distilled water was added dropwise thereto at a speed of 20 ml/min and water-dispersion was performed. After that, the temperature inside the reaction vessel was kept at 80°C for 2 hours, 85°C for 2 hours, and 90°C for 2 hours under atmospheric pressure. Subsequently, the pressure inside the reaction vessel was reduced, and the isopropanol, methyl ethyl ketone and distilled water were distilled away in a total amount of 913.7 g (a solvent-removing process) to obtain an aqueous dispersion (an emulsion) of self-dispersing resin particles P-2, having a solid concentration of 28.0%. The volume average particle diameter was 40 nm.

-Synthesis of Self-Dispersing Resin Particles P-3-

An aqueous dispersion of self-dispersing resin particles P-3 was obtained in the same manner as in the synthesis of self-dispersing resin particles P-2, except that 126.0 g of benzyl methacrylate was used instead of 180.0 g of the phenoxyethyl methacrylate, and the amount of the isobutyl methacrylate was changed to 212.4 g. The volume average particle diameter was 45 nm.

-Synthesis of Self-Dispersing Resin Particles P-4-

To a one liter three-necked flask equipped with a stirrer and a reflux condenser, 8.1 g of PIONIN A-43s (manufactured by Takemoto Oil & Fat Co., Ltd.) and 236.0 g of distilled water were placed, and the mixture was heated and stirred to 70°C in a nitrogen stream. To the mixture, 6.2 g of styrene, 3.5 g of n-butyl acrylate, 0.3 g of acrylic acid, 1.0 g of ammonium persulfate and 40 g of distilled water were added, and the resulting mixture was stirred for 30 minutes. After that, a monomer solution of 117.8 g of styrene, 66.5 g of n-butyl acrylate and 5.7 g of acrylic acid was added dropwise at a constant speed so that the addition was completed in 2 hours. After the addition was completed, an aqueous solution of 0.5 g of ammonium persulfate and 20 g of distilled water was added thereto, and the mixture was stirred at 70°C for 4 hours. Then, the temperature of the mixture was elevated to 85°C, and the stirring was continued for further 2 hours. The reaction liquid was cooled and filtered to obtain self-dispersing resin particles P-4. The volume average particle diameter was 70 nm.

Preparation of White Ink Composition 103

Titanium dioxide dispersion 103 was prepared in the same manner as in the preparation of titanium dioxide dispersion 1, except that the water-soluble resin, DISPERBYK-2015, was not used. White ink composition 103 was prepared in the same manner as in the preparation of white ink composition 1 except that the thus obtained titanium dioxide dispersion 103 was used instead of titanium dioxide dispersion 1.

In the titanium dioxide dispersion and the ink composition, aggregates were precipitate with time and the stability was poor, and thus the evaluations thereof could not be performed.

Preparation of White Ink Composition 3

White ink composition 3 was prepared in the same manner as in the preparation of white ink composition 1, except that a viscosity-controlling agent (LUCENTITE SWF manufactured by Co-op Chemical Co., Ltd.; a swellable layered clay compound) was added in a proportion shown in Table 2.

Preparation of White Ink Composition 4

[Preparation of Titanium Dioxide Dispersion 2]

A mixture was obtained by mixing 24 parts of titanium dioxide (R-630 having an average primary particle diameter of 0.24 μm, manufactured by Ishihara Sangyo Kaisha, Ltd.), 6.6 parts of DISPERBYK-190 (a block copolymer having a non-volatile content of 40% by mass, an acid value of 10 mg KOH/g, manufactured by BYK Japan KK), and 89.4 parts of deionized water. The obtained mixture was dispersed at 1000 rpm for 4 hours in a Ready Mill disperser (manufactured by IMEX Co., Ltd.) using zirconia beads having a particle diameter of 0.5 mmϕ to obtain a titanium dioxide dispersion. The titanium dioxide had a volume average secondary particle diameter of 270 nm.

Next, white ink composition 4 was prepared in the same manner as in the preparation of white ink composition 3, except that titanium dioxide dispersion 2 was used instead of titanium dioxide dispersion 1.

Preparation of White Ink Composition 5

[Preparation of Titanium Dioxide Dispersion 3]

Titanium dioxide dispersion 3 was prepared in the same manner as in the preparation of titanium dioxide dispersion 2, except that titanium dioxide R-90 having an average primary particle diameter of 0.25 μm (manufactured by Ishihara Sangyo Kaisha, Ltd.) was used instead of titanium dioxide R-630. The titanium dioxide had a volume average secondary particle diameter of 320 nm.
Next, white ink composition 5 was prepared in the same manner as in the preparation of white ink composition 3, except that titanium dioxide dispersion 3 was used instead of titanium dioxide dispersion 1.

Preparation of White Ink Compositions 6 to 10

White ink compositions 6 to 10 were prepared in the same manner as in the preparation of white ink composition 4, except that the amount of self-dispersing resin particles P-1 was changed to an amount shown in Table 2.
In Table 2, in a case where only a numerical value is shown in a column, the value shows a mass ratio (% by mass) relative to the total mass of each white ink composition, except for the number of the white ink composition. The mass of the titanium dioxide is a solid content in the total mass of the ink composition.

<Evaluation of White Ink Composition>

Using white ink compositions 1 and 3 to 10 of Examples, white ink composition 2 for reference not falling under the scope of the present invention and white ink compositions 101 to 103 of Comparative Examples, the following evaluations were performed. The evaluation results are shown in Table 2 below.

1-1. Evaluation of Re-Dispersibility

80 mL of each white ink compositions of Examples, Reference Example and Comparative Examples were placed in a 100 mL screw tube bottle, which was then sealed, and the screw tube was allowed to stand in an atmosphere of room temperature 25°C for 2 weeks. After that, the screw tube was shaken up and down 10 times with a width of 20 cm, and then 2 mL of the ink in the screw tube bottle was collected gently from the vicinity of the liquid surface of the bottle.
1 g of the collected sample, obtained as described above, was diluted with deionized water by 10000 times. An absorbance (Abs. value) of the diluted liquid was measured at a wavelength of 490 nm using a spectrophotometer. The thus obtained absorbance of each sample was compared with an absorbance obtained immediately after the preparation of the white ink composition, and a recovery factor in the absorbance was obtained using the following formula (2):

-Formula (2)-

$$\text{Recovery factor in absorbance (\%)} = 100 \times (\text{absorbance after it was allowed to stand})/(\text{absorbance immediately after preparation})$$

The obtained results were evaluated based on the following criteria:

A: 95% of more of recovery factor
B: from 85% to less than 95% of recovery factor
C: from 70% to less than 85% of recovery factor
D: less than 70% of recovery factor

1-2. Evaluation of Rubbing Resistance

An ink was discharged at a resolution of 1200 dpi × 1200 dpi in an amount of the ink liquid droplet of 5 pL on a PET base material, which was a transparent PET film, (an OHP film GAAA 5224 for PPC/laser, having a thickness of 50 μm, manufactured by Fuji Xerox Co., Ltd) to produce an A5 size sample on which a solid image was formed on the whole surface. The formed sample was subjected to the following treatment, and the rubbing resistance of the image (white image) was evaluated.
The sample was allowed to stand at 35°C in an atmosphere of 50% RH for 72 hours, and the surface of the

solid image on the sample after it was allowed to stand was placed on an unused sample (a PET base material on which an image was not recorded), and the resulting laminate was rubbed back and forth 10 times with a load of 200 $kg/m^2$. After that, the unused sample and the solid image were visually observed, and evaluation was performed based on the following criteria.

<Evaluation Criteria>

A: Neither color adherence to the unused sample nor deterioration of the rubbed solid image was observed.
B: Color adherence to the unused sample and deterioration of the rubbed solid image were observed.
C: The rubbed solid image was fallen away.

1-3. Evaluation of Secondary Color Density

The following components were mixed, the mixture was passed through a filter manufactured by EMD Millipore Corporation (a PVDF film having a pore size of 5 μm) to obtain a black ink. As the carbon black dispersion, NIPEX 170, manufactured by Degussa Corporation was used.

-Composition of Black Ink-

- Carbon black dispersion (concentration of NIPEX170: 10% by mass 20.0% by mass
- Hydroxyethyl acrylamide (monofunctional acrylamide) 15.0% by mass
- Tetrafunctional acrylamide 1 (exemplified compound a listed above) 10.0% by mass
- SANNIX GP250 (a hydrophilic organic solvent manufactured by Sanyo Chemical Industries, Ltd.) 2.0% by mass
- OLFINE E1010 (surfactant manufactured by Nissin Chemical Co., Ltd.) 1.0% by mass
- IRGACURE 2959 (photopolymerization initiator manufactured by BASF Corporation) 3.0% by mass
- Self-dispersing polymer particles P-1 (solid content) 2.0% by mass
- Deionized water the remainder so that the total amount was 100.0% by mass)

A sample having a white solid image was produced in the same manner as in the preparation of the sample for the friction resistance evaluation.

Next, a black ink was discharged on the white solid image at a resolution of 1200 dpi x 1200 dpi in an amount of a ink droplet of 3 pL, and curing was performed by UV exposure. After that, a color density (OD; an optical density) was measured using a spectroscan manufactured by GretagMacbeth, Inc. The evaluation criteria are as follows:

<Evaluation Criteria>

A: OD of 1.75 or more
B: OD of from 1.5 to less than 1.75
C: OD of less than 1.5

Table 2

| | | | Example 1 | Example 2 | Comparative Example 1 | Comparative Example 2 | Comparative Example 3 |
|---|---|---|---|---|---|---|---|
| | Name of product | | White ink composition | | | | |
| | | | 1 | 2 | 101 | 102 | 103 |
| Titanium dioxide | R-630 [Surface treatment: Al Average primary particle diameter: 0.24 μm] | wt % | 10 | 10 | 10 | 10 | 10 |
| | CR-90 [Surface treatment: Al·Si Average primary particle diameter: 0.25 μm] | wt % | | | | | |
| Water-soluble resin solution | DISPERBYK-2015 (Solid content 40wt %) | wt % | 1.8 | 1.8 | 1.8 | 1.8 | |
| | DISPERBYK-190 (Solid content 40wt %) | wt % | | | | | |
| Water-soluble organic solvent | SANNIX GP250 | wt % | 10 | 10 | 10 | 10 | 10 |
| Hydrophilic layered clay compound | LUCENTITE SWF | wt % | | | | | |
| Surfactant | OLFINE E1010 | wt % | 1 | 1 | 1 | 1 | 1 |
| Self-dispersing resin particles | P-1 [Average particle diameter: 15 nm] | wt % | 2 | | | | |
| | P-2 [Average particle diameter: 40 nm] | wt % | | 2 | | | |
| | P-3 [Average particle diameter: 45 nm] | wt % | | | 2 | | |
| | P-4 [Average particle diameter: 70 nm] | wt % | | | | 2 | 2 |
| Water | Deionized water | | Remainder | Remainder | Remainder | Remainder | Remainder |
| Evaluation | Re-Dispersibility | | B | B | C | D | D |
| | Rubbing resistance | | A | B | C | C | Evaluation impossible |
| | Secondary color density | | B | B | C | C | Evaluation impossible |

Table 2- continued

| | | | Example 3 | Example 4 | Example 5 | Example 6 | Example 7 | Example 8 | Example 9 | Example 10 |
|---|---|---|---|---|---|---|---|---|---|---|
| | Name of product | | White ink composition | | | | | | | |
| | | | 3 | 4 | 5 | 6 | 7 | 8 | 9 | 10 |
| Titanium dioxide | R-630 [Surface treatment: Al Average primary particle diameter: 0.24 μm] | wt % | 10 | 10 | | 10 | 10 | 10 | 10 | 10 |
| | CR-90 [Surface treatment: Al·Si Average primary particle diameter: 0.25 μm] | wt % | | | 10 | | | | | |
| Water-soluble resin solution | DISPERBYK-2015 (Solid content 40wt %) | wt % | 1.8 | | | | | | | |
| | DISPERBYK-190 (Solid content 40wt %) | wt % | | 2.75 | 2.75 | 2.75 | 2.75 | 2.75 | 2.75 | 2.75 |
| Water-soluble organic solvent | SANNIX GP250 | wt % | 10 | 10 | 10 | 10 | 10 | 10 | 10 | 10 |
| Hydrophilic layered clay compound | LUCENTITE SWF | wt % | 0.5 | 0.5 | 0.5 | 0.5 | 0.5 | 0.5 | 0.5 | 0.5 |
| Surfactant | OLFINE E1010 | wt % | 1 | 1 | 1 | 1 | 1 | 1 | 1 | 1 |
| Self-dispersing resin particles | P-1 [Average particle diameter: 15 nm] | wt % | 2 | 2 | 2 | 0.5 | 0.7 | 1 | 2.5 | 3 |
| | P-2 [Average particle diameter: 40 nm] | wt % | | | | | | | | |
| | P-3 [Average particle diameter: 45 nm] | wt % | | | | | | | | |
| | P-4 [Average particle diameter: 70 nm] | wt % | | | | | | | | |
| Water | Deionized water | | Remainder | Remainder | Remainder | Remainder | Remainder | Remainder | Remainder | Remainder |
| Evaluation | Re-Dispersibility | | A | A | B | B | B | B | A | A |
| | Rubbing resistance | | A | A | B | B | B | A | A | B |
| | Secondary color density | | A | A | A | B | B | A | A | B |

In Table 2, Example 2 is a Reference Example not falling under the scope of the present invention.

[Example 11 to Example 26 and Example 28 to 34; Reference Example 27]

White ink compositions 11 to 34 of Example 11 to Example 26, Example 28 to Example 34 and Reference Example 27 respectively were prepared as follows.

Preparation of White Ink Composition 11

The following components were mixed, and the mixture was passed through a filter manufactured by EMD Millipore Corporation (a PVDF film having a pore size of 5 μm) to obtain a white ink composition 11. The tetrafunctional acrylamide 1 was synthesized as follows.
-Composition of White Ink Composition 11-

- Titanium dioxide dispersion 1 (concentration of titanium dioxide density of 20% by mass) 50.0% by mass
- Hydroxyethyl acrylamide (monofunctional acrylamide) 15.0% by mass
- Tetrafunctional acrylamide 1 (exemplified compound a listed above) 10.0% by mass
- SANNIX GP250 [hydrophilic organic solvent manufactured by Sanyo Chemical Industries, Ltd.] 2.0% by mass
- OLFINE E1010 [surfactant manufactured by Nissin Chemical Co., Ltd.] 1.0% by mass
- IRGACURE 2959 (photopolymerization initiator manufactured by BASF Corporation) 3.0% by mass
- Self-dispersing resin particles P-5 (solid content) 2.0% by mass
- Deionized water the remainder (the remainder so that the total amount was 100.0% by mass)

[Synthesis of Tetrafunctional Acrylamide 1]

As the (meth)acrylamide compound represented by formula (1) (the specific (meth)acrylamide compound), the tetrafunctional acrylamide 1 (exemplified compound (a) listed above) was synthesized as follows:

-First Process-

To a one liter three-necked flask equipped with a stirrer bar, 121 g (one equivalent) of tris(hydroxymethyl)aminomethane (manufactured by Tokyo Chemical Industry Co., Ltd. ), 84 ml of a 50% by mass aqueous potassium hydroxide solution, and 423 ml of toluene were placed, and the mixture was stirred. To the mixture, 397.5 g (7.5 equivalents) of acrylonitrile was added dropwise over 2 hours in a water bath, while the temperature of reaction system was kept at in a range of from 20°C to 25°C. After the addition was completed, the resulting mixture was stirred for 1.5 hours. After that, 540 ml of toluene was further added to the reaction system, and the reaction mixture was poured into a separatory funnel, and an aqueous phase was removed. The remaining organic layer was dried on magnesium sulfate, and was filtered through a celite, and the solvent was distilled away therefrom under a reduced pressure, thereby obtaining an acrylonitrile adduct. The analysis results of the obtained substance according to the $^1$H-NMR and MS were well agreed with those of a known product, and thus it was used in the next reduction reaction without a further purification.

-Second Process-

To a 1 L autoclave, 24 g of the obtained acrylonitrile adduct, 48 g of an Ni catalyst (RANEY NICKEL 2400 manufactured by W. R. Grace & Co.), and 600 ml of a 25% by mass aqueous ammonia solution (water : methanol = 1 : 1), and the mixture was dispersed and sealed in a reaction vessel. Into the reaction vessel, 10 Mpa of hydrogen was introduced, and the reaction was performed at a reaction temperature of 25°C for 16 hours.
The disappearance of the starting materials was confirmed by $^1$H-NMR, the reaction mixture was filtered through celite, and the celite was washed with methanol several times. The solvent was distilled away from the filtrate under a reduced pressure to obtain a polyamine product. The obtained substance was used in the next reaction without a further purification.

-Third Process-

To a 2 liter three-necked flask equipped with a stirrer, 30 g of the obtained polyamine product, 120 g (14 equivalents) of $NaHCO_3$, one liter of dichloromethane, and 50 ml of water were placed, 92.8 g (10 equivalents) of acryloyl chloride was added dropwise over 3 hours to the mixture, in an ice bath. After that the mixture was stirred at room temperature for 3 hours. After the disappearance of the starting materials was confirmed by $^1$H-NMR, the solvent was

distilled away from the reaction mixture under a reduced pressure. Subsequently, the reaction mixture was dried on magnesium sulfate, filtered through celite, and the solvent was distilled away under a reduced pressure. Finally, the product was purified through a column chromatography (ethyl acetate/methanol =4:1), whereby a Tetrafunctional acrylamide 1 (a compound having formula (1) wherein $R^1 = H$; $R^2 = C_3H_6$; $R^3 = CH_2$; and X = Y = Z = 0) was obtained in a solid state under an ordinary temperature.

The yield of the tetrafunctional acrylamide 1 obtained through the above described three processes was 40% by mass.

Preparation of White Ink Compositions 12 to 16

Titanium dioxide dispersions 4 to 8 were prepared in the same manner as in the preparation of titanium dioxide dispersion 1 used in the preparation of white ink composition 11, except that titanium dioxide CR-90 (manufactured by Ishihara Sangyo Kaisha, Ltd.), titanium dioxide CR-50-2 (manufactured by Ishihara Sangyo Kaisha, Ltd.), titanium dioxide CR-70Super (manufactured by Ishihara Sangyo Kaisha, Ltd.), titanium dioxide CR-60 (manufactured by Ishihara Sangyo Kaisha, Ltd.), or titanium dioxide R-680 (manufactured by Ishihara Sangyo Kaisha, Ltd.) was used instead of titanium dioxide R-630 (manufactured by Ishihara Sangyo Kaisha, Ltd.).

Next, white ink compositions 12 to 16 were prepared in the same manner as in the preparation of white ink composition 11, except that each of titanium dioxide dispersions 4 to 8 was used instead of titanium dioxide dispersion 1.

Preparation of White Ink Composition 17

Titanium dioxide dispersion 9 was prepared in the same manner as in the preparation of titanium dioxide dispersion 1 used in the preparation of white ink composition 11, except that 3.5 parts of DISPERBYK-183 (manufactured by BYK Japan KK) was used instead of the water-soluble resin, DISPERBYK-2015, and the amount of deionized water was adjusted so that the titanium dioxide had the same concentration as that of titanium dioxide dispersion 1.

Next, white ink composition 17 was prepared in the same manner as in the preparation of white ink composition 11, except that titanium dioxide dispersion 9 was used instead of titanium dioxide dispersion 1.

(Preparation of White Ink Composition 18)

Titanium dioxide dispersion 10 was prepared in the same manner as in the preparation of titanium dioxide dispersion 1 used in the preparation of white ink composition 11, except that 1.7 parts of DISPERBYK-192 (manufactured by BYK Japan KK) was used instead of the water-soluble resin, DISPERBYK-2015, and the amount of the deionized water was adjusted so that the titanium dioxide had the same concentration as that of titanium dioxide dispersion 1.

Next, white ink composition 18 was prepared in the same manner as in the preparation of white ink composition 11, except that titanium dioxide dispersion 10 was used instead of titanium dioxide dispersion 1.

Preparation of White Ink Composition 19

Titanium dioxide dispersion 11 was prepared in the same manner as in the preparation of titanium dioxide dispersion 1 used in the preparation of white ink composition 11, except that DISPERBYK-190 (manufactured by BYK Japan KK) was used instead of the water-soluble resin, DISPERBYK-2015.

Next, white ink composition 19 was prepared in the same manner as in the preparation of white ink composition 11, except that titanium dioxide dispersion 11 was used instead of titanium dioxide dispersion 1.

Preparation of White Ink Composition 20

Titanium dioxide dispersion 12 was prepared in the same manner as in the preparation of titanium dioxide dispersion 11 used in the preparation of white ink composition 19, except that 6.5 part of the water-soluble resin, DISPERBYK-190 (manufactured by BYK Japan KK) was used, and the amount of the deionized water was adjusted so that the titanium dioxide has the same concentration as that of the dispersion 11.

Next, white ink composition 20 was obtained in the same manner as in the preparation of white ink composition 19, except that titanium dioxide dispersion 12 was used instead of titanium dioxide dispersion 11.

Preparation of White Ink Compositions 21 to 31, 33 and 34 (White Ink Composition 27 for Reference)

White ink compositions 21 to 31, 33 and 34 were prepared in the same manner as in the preparation of the white ink composition 11, except that the kind and amount of the self-dispersing resin particles added were changed to

those shown in Table 4 or 5 and in white ink compositions 30, 31, 33 and 34, LUCENTITE SWF was added so as to attain the ratio shown in Table 5.

Preparation of White Ink Composition 32

Next, white ink composition 32 was prepared in the same manner as in the preparation of white ink composition 19, except that the kind and amount of the self-dispersing resin particles added were changed to those shown in Table 5, and LUCENTITE SWF was added so that the ratio was shown in Table 5.

Self-dispersing resin particles P-5 to P-10 were produced as follows.

-Synthesis of Self-Dispersing Resin Particles P-5 to P-10-

Self-dispersing resin particles were prepared in the same manner as in the synthesis of self-dispersing resin particles P-1, except that the monomer ratios were changed to those shown in Table 3. Similarly to the volume average particle diameter of self-dispersing resin particles P-1, the volume average particle diameter of each of self-dispersing resin particles P-5 to P-10 was 15 nm.

Table 3

| | Tg (°C) | Constituent component A | Constituent component B | Constituent component C | A/B/C (mass ratio) | Mw | Average particle diameter (nm) |
|---|---|---|---|---|---|---|---|
| P-5 | 102 | Phenoxyethyl acrylate | Methyl methacrylate | Methacrylic acid | 15/75/10 | 60000 | 15 |
| P-6 | 76 | Benzyl methacrylate | Methyl methacrylate | Methacrylic acid | 70/20/10 | 58000 | 15 |
| P-7 | 73 | Phenoxyethyl acrylate | Methyl methacrylate | Methacrylic acid | 52/38/10 | 57000 | 15 |
| P-8 | 90 | Cyclohexyl methacrylate | Methyl methacrylate | Methacrylic acid | 85/5/10 | 56000 | 15 |
| P-9 | 106 | Phenoxyethyl acrylate | Methyl methacrylate | Methacrylic acid | 10/80/10 | 60000 | 15 |
| P-10 | 90 | Phenoxyethyl acrylate | Methyl methacrylate | Methacrylic acid | 30/60/10 | 58000 | 15 |

<Evaluation of White Ink Composition 11 to White Ink Composition 34, White Ink Composition 27 not falling under the scope of the present invention>

2-1. Re-Dispersibility Evaluation and Secondary Color Density Evaluation

The re-dispersibility and the secondary color density of white ink compositions 11 to 34 were evaluated in the same manner as in the evaluation of those of white ink composition 1 in Example 1, except that each of white ink compositions 11 to 34 (white ink composition 27 not falling under the scope of the present invention) was used instead of white ink composition 1. The evaluation results are shown in Table 4 and Table 5.

2-2. Evaluation of Rubbing Resistance

An ink was discharged at a resolution of 1200 dpi × 1200 dpi in an amount of an ink liquid droplet of 5 pL on a PET base material, which was a transparent PET film, (an OHP film GAAA 5224 for PPC/laser, having a thickness of 50 μm, manufactured by Fuji Xerox Co., Ltd) to produce an A5 size sample on which a solid image was formed on the whole surface. The formed sample was subjected to the following treatment, and the rubbing resistance of the image (white image) was evaluated. Warm air having a temperature of 120°C was applied at 5 m/sec to a recorded surface of the obtained sample for 5 seconds using an air blower while the sample was heated with an infrared heater from a back side of the surface on which the ink droplets are adhered, whereby the image was dried. After the sample was dried, UV light (using a metal halide lump manufactured by Eye Graphics Co., Ltd., the maximum irradiation wavelength: 365

nm) was irradiated to the image so that the integrated irradiation amount was 2.3 $J/cm^2$ to UV-cure the image.

The sample produced was allowed to stand at 25°C in an atmosphere of 50% RH for 72 hours, and the surface of the solid image on the sample after it was allowed to stand was placed on an unused sample (a PET base material on which an image was not recorded), and the resulting laminate was rubbed back and forth 10 times with a load of 200 $kg/m^2$. After that, the unused sample and the solid image were visually observed, and evaluation was performed based on criteria described below. The evaluation results are shown in Table 4 and Table 5.

<Evaluation Criteria>

A: Neither color adherence on the unused sample nor deterioration of the rubbed solid image was observed.
B: Color adherence to the unused sample was observed, but deterioration of the rubbed solid image was not observed.
C: Color adhered to the unused sample, and it was observed that the rubbed solid image was deteriorated.
D: The rubbed solid image was fallen away.

Table 4

| | | | Example | | | | | | | | | | | |
|---|---|---|---|---|---|---|---|---|---|---|---|---|---|---|
| | | | 11 | 12 | 13 | 14 | 15 | 16 | 17 | 18 | 19 | 20 | 21 | 22 |
| | Name of product | | White ink composition | | | | | | | | | | | |
| | | | 11 | 12 | 13 | 14 | 15 | 16 | 17 | 18 | 19 | 20 | 21 | 22 |
| Titanium dioxide | R-630 [Surface treatment: Al Primary particle diameter: 0.24 μm] | wt % | 10 | | | | | | 10 | | 10 | | 10 | 10 |
| | CR-90 [Surface treatment: Al·Si Primary particle diameter: 0.25 μm] | wt % | | 10 | | | | | | | | | | |
| | CR-50-2 [Surface treatment: Al·Organic substance Primary particle diameter: 0.25 μm] | wt % | | | 10 | | | | | | | | | |
| | CR-70Super [Surface treatment: Al·Zr·Organic substance Primary particle diameter: 0.25 μm] | wt % | | | | 10 | | | | 10 | | | | |
| | CR-60 [Surface treatment: Al Primary particle diameter: 0.28 μm] | wt % | | | | | 10 | | | | | | | |

(continued)

| | | | Example | | | | | | | | | | | |
|---|---|---|---|---|---|---|---|---|---|---|---|---|---|---|
| | | | 11 | 12 | 13 | 14 | 15 | 16 | 17 | 18 | 19 | 20 | 21 | 22 |
| | Name of product | | White ink composition | | | | | | | | | | | |
| | | | 11 | 12 | 13 | 14 | 15 | 16 | 17 | 18 | 19 | 20 | 21 | 22 |
| | R-680 [Surface treatment: Al Primary particle diameter: 0.21 μm] | wt % | | | | | | 10 | | | | | | |
| Water-soluble resin solution | DISPERBYK-2015 (Solid content 40wt %) | wt % | 1.8 | 1.8 | 1.8 | 1.8 | 1.8 | 1.8 | | | | | 1.8 | 1.8 |
| | DISPERBYK-183 (Solid content 52wt %) | wt % | | | | | | | 1.4 | | | | | |
| | DISPERBYK-192 (Solid content 100wt %) | wt % | | | | | | | | 0.7 | | | | |
| | DISPERBYK-190 (Solid content 40wt %) | wt % | | | | | | | | | 1.8 | 2.7 | | |
| | Name of product | | White ink composition | | | | | | | | | | | |
| | | | 11 | 12 | 13 | 14 | 15 | 16 | 17 | 18 | 19 | 20 | 21 | 22 |
| Water-soluble organic solvent | SANNIX GP250 | wt % | 2 | 2 | 2 | 2 | 2 | 2 | 2 | 2 | 2 | 2 | 2 | 2 |

(continued)

| | Name of product | | White ink composition | | | | | | | | | | | |
|---|---|---|---|---|---|---|---|---|---|---|---|---|---|---|
| | | | 11 | 12 | 13 | 14 | 15 | 16 | 17 | 18 | 19 | 20 | 21 | 22 |
| Water-soluble polymerizable compound | Hydroxyethyl acrylamide (monofunctional acrylamide) | wt % | 15 | 15 | 15 | 15 | 15 | 15 | 15 | 15 | 15 | 15 | 15 | 15 |
| | Tetrafunctional acrylamide 1 (exemplified compound a) | wt % | 10 | 10 | 10 | 10 | 10 | 10 | 10 | 10 | 10 | 10 | 10 | 10 |
| Polymerization initiator | IRGACURE 2959 | wt % | 3 | 3 | 3 | 3 | 3 | 3 | 3 | 3 | 3 | 3 | 3 | 3 |
| Surfactant | OLFINE E1010 | wt % | 1 | 1 | 1 | 1 | 1 | 1 | 1 | 1 | 1 | 1 | 1 | 1 |
| Self-dispersing resin particles | P-5 [Tg: 102°C] | wt % | 2 | 2 | 2 | 2 | 2 | 2 | 2 | 2 | 2 | 2 | 5 | 0.25 |
| Water | Deionized water | | Remainder | Remainder | Remainder | Remainder | Remainder | Remainder | Remainder | Remainder | Remainder | Remainder | Remainder | Remainder |
| Evaluation | Re-Dispersibility | | B | C | B | B | B | B | C | B | B | A | B | B |
| | Rubbing resistance | | A | A | A | A | B | A | B | B | A | A | A | B |
| | Secondary color density | | A | A | A | A | A | B | B | B | A | A | B | B |

Table 5

| | | | Example | | | | | | | | | | | |
|---|---|---|---|---|---|---|---|---|---|---|---|---|---|---|
| | | | 23 | 24 | 25 | 26 | 27 | 28 | 29 | 30 | 31 | 32 | 33 | 34 |
| | Name of product | | White ink composition | | | | | | | | | | | |
| | | | 23 | 24 | 25 | 26 | 27 | 28 | 29 | 30 | 31 | 32 | 33 | 34 |
| Titanium dioxide | R-630 [Surface treatment: Al Primary particle diameter: 0.24 μm] | wt % | 10 | 10 | 10 | 10 | 10 | 10 | 10 | 10 | 10 | 10 | 10 | 10 |
| Water-soluble resin solution | DISPERBYK-2015 (Solid content 4 0wt %) | wt % | 1.8 | 1.8 | 1.8 | 1.8 | 1.8 | 1.8 | 1.8 | 1.8 | 1.8 | | 1.8 | 1.8 |
| | DISPERBYK-190 (Solid content 40 wt %) | wt % | | | | | | | | | | 1.8 | 1.8 | 1.8 |
| Water-soluble organic solvent | SANNIX GP250 | wt % | 2 | 2 | 2 | 2 | 2 | 2 | 2 | 2 | 2 | 2 | 2 | 2 |
| Water-soluble polymerizable compound | Hydroxyethyl acrylamide (monofunctional acrylamide) | wt % | 15 | 15 | 15 | 15 | 15 | 15 | 15 | 15 | 15 | 15 | 15 | 15 |
| | Tetrafunctional acrylamide 1 (exemplified compound a) | wt % | 10 | 10 | 10 | 10 | 10 | 10 | 10 | 10 | 10 | 10 | 10 | 10 |
| Polymerization initiator | IRGACURE 2959 | wt % | 3 | 3 | 3 | 3 | 3 | 3 | 3 | 3 | 3 | 3 | 3 | 3 |
| Hydrophilic layered clay compound | LUCENTITE SWF | wt % | | | | | | | | 0.1 | 0.4 | 0.4 | 1.5 | 3 |
| Surfactant | OLFINE E1010 | wt % | 1 | 1 | 1 | 1 | 1 | 1 | 1 | 1 | 1 | 1 | 1 | 1 |

(continued)

| | | | Example | | | | | | | | | | | |
|---|---|---|---|---|---|---|---|---|---|---|---|---|---|---|
| | | | 23 | 24 | 25 | 26 | 27 | 28 | 29 | 30 | 31 | 32 | 33 | 34 |
| | Name of product | | White ink composition | | | | | | | | | | | |
| | | | 23 | 24 | 25 | 26 | 27 | 28 | 29 | 30 | 31 | 32 | 33 | 34 |
| Self-dispersing resin particles | P-1 [Tg: 90°C] | wt % | | 2 | | | | | | 2 | 2 | 2 | 2 | 2 |
| | P-5 [Tg: 102°C] | wt % | 1 | | | | | | | | | | | |
| | P-6 [Tg: 76°C] | wt % | | | 2 | | | | | | | | | |
| | P-7 [Tg: 73°C] | wt % | | | | 2 | | | | | | | | |
| | P-8 [Tg: 90°C] | wt % | | | | | 2 | | | | | | | |
| | P-9 [Tg: 106°C] | wt % | | | | | | 2 | | | | | | |
| | P-10 [Tg: 90°C] | wt % | | 2 | | | | | 2 | | | | | |
| Water | Deionized water | | Remainder | Remainder | Remainder | Remainder | Remainder | Remainder | Remainder | Remainder | Remainder | Remainder | Remainder | Remainder |
| Evaluation | Re-Dispersibility | | B | B | B | B | B | B | B | B | A | A | A | A |
| | Rubbing resistance | | A | B | B | B | A | A | A | A | A | A | A | B |
| | Secondary color density | | A | A | B | B | B | A | A | A | A | A | A | A |

In Table 5, Example 27 is a Reference Example not falling under the scope of the present invention.

[Example 35 to Example 37 and Reference Example 38]

Preparation of White Ink Compositions 35 to 37 and White Ink Composition 38 for reference, not falling under the scope of the present invention

White ink compositions 35 to 38 (white ink composition 38 not falling under the scope of the present invention) were prepared in the same manner as in the preparation of white ink composition 1, except that self-dispersing resin particles P-5 to P-8 were used, respectively, instead of self-dispersing resin particles P-1.

These white ink compositions were evaluated in the same manner as in Example 1. The results are shown in Table 6. In Table 6, the results in Example 1 are also shown for reference.

Table 6

| | Name of product | | Example: White ink composition 1 | 35 | 36 | 37 | 38 |
|---|---|---|---|---|---|---|---|
| Titanium dioxide | R-630 [Surface treatment: Al Primary particle diameter: 0.24 μm] | wt % | 10 | 10 | 10 | 10 | 10 |
| Water-soluble resin solution | DISPERBYK-2015 (Solid content 40wt %) | wt % | 1.8 | 1.8 | 1.8 | 1.8 | 1.8 |
| Water-soluble organic solvent | SANNIX GP250 | wt % | 10 | 10 | 10 | 10 | 10 |
| Surfactant | OLFINE E1010 | wt % | 1 | 1 | 1 | 1 | 1 |
| Self-dispersing resin particles | P-1 [Tg: 90°C] | wt % | 2 | | | | |
| | P-5 [Tg: 102°C] | wt % | | 2 | | | |
| | P-6 [Tg: 76°C] | wt % | | | 2 | | |
| | P-7 [Tg: 73°C] | wt % | | | | 2 | |
| | P-8 [Tg: 90°C] | wt % | | | | | 2 |
| Water | Deionized water | | Remainder | Remainder | Remainder | Remainder | Remainder |
| Evaluation | Re-Dispersibility | | B | B | B | B | B |
| | Rubbing resistance | | A | A | B | B | A |
| | Secondary color density | | B | B | B | B | B |

In Table 6, Example 38 is a Reference Example not falling under the scope of the present invention.

As shown in Table 2 to Table 6, it can be seen that in a case where the titanium dioxide having an average primary particle diameter of 200 nm (0.2 μm) or more is used as one of the components of the ink composition, if the water-soluble resin and the self-dispersing resin particles having an average particle diameter of 40 nm or less are used, the re-dispersibility of the ink composition, the rubbing resistance of the white image, and the secondary color density of the colored image (the black image) formed on the white image can be attained. In the Comparative Examples in which the water-soluble resin or the self-dispersing resin particles having an average particle diameter of 40 nm or less are not used, the re-dispersibility of the ink composition and the rubbing resistance of the image are particularly insufficient.

In addition, as shown in Table 4 and Table 5, it can be seen that the titanium dioxide including no silica on its particle surface has excellent re-dispersibility of the ink composition. As shown in Table 4 to Table 6, it can also be seen that in the case where the self-dispersing resin particles having a glass transition temperature (Tg) of 90°C or higher are used, further superior rubbing resistance of the image can be obtained.

Exemplary embodiments of the invention include, but not limited to, the following.

<1> An ink composition for an inkjet, comprising:

titanium dioxide having an average primary particle diameter of 200 nm or more, wherein said average primary particle diameter is obtained as an arithmetic average value calculated from a circle equivalent diameter;
a water-soluble resin;
self-dispersing resin particles having an average particle diameter of 30 nm or less, wherein said average particle diameter is obtained by measuring a volume average particle diameter according to a dynamic light scattering method; and
water, wherein a resin included in the self-dispersing resin particles includes at least one of a structural unit having a benzyl group or a structural unit having a phenoxy group, as a structural unit having an aromatic group.

<2> The ink composition for an inkjet according to <1>, wherein a content of the self-dispersing resin particles is from 5% by mass to 40% by mass relative to the total mass of the titanium dioxide.

<3> The ink composition for an inkjet according to <1> or <2>, wherein the self-dispersing resin particles have a glass transition temperature of 90°C or higher.

<4> The ink composition for an inkjet according to any one of <1> to <3>, wherein a particle surface of the titanium dioxide includes at least one atom selected from the group consisting of a titanium atom, an oxygen atom, an aluminum atom, a zirconium atom, a carbon atom and a hydrogen atom.

<5> The ink composition for an inkjet according to any one of <1> to <4>, wherein a resin included in the self-dispersing resin particles includes a structural unit having an aromatic group in an amount of from 3% by mass to 45% by mass in total, relative to the total amount of the resin.

<6> The ink composition for an inkjet according to any one of <1> to <5>, wherein a resin included in the self-dispersing resin particles includes: at least one structural unit derived from benzyl (meth)acrylate or phenoxyethyl (meth)acrylate in an amount of from 3% by mass to 45% by mass in total; a structural unit derived from (meth)acrylic acid in an amount of from 5% by mass to 20% by mass in total; and a structural unit derived from an alkyl (meth)acrylate in an amount of from 40% by mass to 90% by mass in total, relative to the total amount of the resin.

<7> The ink composition for an inkjet according to any one of <1> to <6>, wherein the self-dispersing resin particles are resin particles obtained by a phase inversion emulsification method.

<8> The ink composition for an inkjet according to any one of <1> to <7>, further comprising at least one hydrophilic layered clay mineral in an amount of from 0.1% by mass to 3% by mass in total, relative to the total mass of the ink composition.

<9> The ink composition for an inkjet according to any one of <1> to <8>, further comprising a water-soluble polymerizable compound and a polymerization initiator.

<10> The ink composition for an inkjet according to <1>, further comprising a polymer compound including a repeating unit (g-1) having a partial structure represented by the following formula (I), and a repeating unit (g-2) having a hydrophilic group

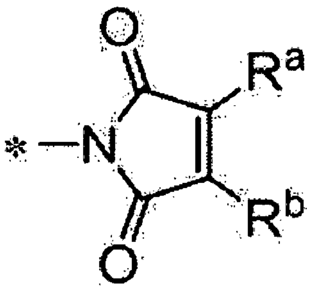

(I)

wherein in formula (I), each of $R^a$ and $R^b$ independently represents a hydrogen atom or an alkyl group having from 1 to 4 carbon atoms, provided that at least one of $R^a$ or $R^b$ represents an alkyl group having from 1 to 4 carbon atoms; $R^a$ and $R^b$ may be bonded to each other to form a 4-membered to 6-membered alicyclic structure; the symbol * represents a position at which the partial structure represented by formula (I) is bonded to the main chain or a side chain in the polymer compound.

According to the invention, it is possible to provide an ink composition for an inkjet which has an excellent re-dispersibility, can form an image having superior resistance to rubbing, and can provide a high density of a secondary color.

## Claims

1. An ink composition for an inkjet, comprising:

   titanium dioxide having an average primary particle diameter of 200 nm or more, wherein said average primary particle diameter is obtained as an arithmetic average value calculated from a circle equivalent diameter;
   a water-soluble resin;
   self-dispersing resin particles having an average particle diameter of 30 nm or less, wherein said average particle diameter is obtained by measuring a volume average particle diameter according to a dynamic light scattering method; and
   water wherein a resin included in the self-dispersing resin particles includes at least one of a structural unit having a benzyl group or a structural unit having a phenoxy group, as a structural unit having an aromatic group.

2. The ink composition for an inkjet according to claim 1, wherein a content of the self-dispersing resin particles is from 5% by mass to 40% by mass relative to the total mass of the titanium dioxide.

3. The ink composition for an inkjet according to claim 1 or 2, wherein the self-dispersing resin particles have a glass transition temperature of 90°C or higher, wherein the glass transition temperature is measured using a differential scanning calorimeter.

4. The ink composition for an inkjet according to any one of claims 1 to 3, wherein a particle surface of the titanium dioxide includes at least one atom selected from the group consisting of a titanium atom, an oxygen atom, an aluminum atom, a zirconium atom, a carbon atom and a hydrogen atom.

5. The ink composition for an inkjet according to any one of claims 1 to 4, wherein a resin included in the self-dispersing resin particles includes a structural unit having an aromatic group in an amount of from 3% by mass to 45% by mass in total, relative to the total amount of the resin.

6. The ink composition for an inkjet according to any one of claims 1 to 5, wherein a resin included in the self-dispersing resin particles includes: at least one structural unit derived from benzyl (meth)acrylate or phenoxyethyl (meth)acrylate in an amount of from 3% by mass to 45% by mass in total; a structural unit derived from (meth)acrylic acid in an amount of from 5% by mass to 20% by mass in total; and a structural unit derived from an alkyl (meth)acrylate in an amount of from 40% by mass to 90% by mass in total, relative to the total amount of the resin.

7. The ink composition for an inkjet according to any one of claims 1 to 6, wherein the self-dispersing resin particles are resin particles obtained by a phase inversion emulsification method.

8. The ink composition for an inkjet according to any one of claims 1 to 7, further comprising at least one hydrophilic

layered clay mineral in an amount of from 0.1% by mass to 3% by mass in total, relative to the total mass of the ink composition.

**9.** The ink composition for an inkjet according to any one of claims 1 to 8, further comprising a water-soluble polymerizable compound and a polymerization initiator.

**10.** The ink composition for an inkjet according to claim 1, further comprising a polymer compound including a repeating unit (g-1) having a partial structure represented by the following formula (I), and a repeating unit (g-2) having a hydrophilic group

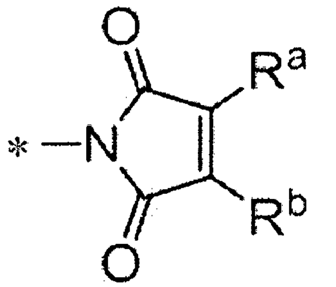

(I)

wherein in formula (I), each of Ra and Rb independently represents a hydrogen atom or an alkyl group having from 1 to 4 carbon atoms, provided that at least one of Ra or Rb represents an alkyl group having from 1 to 4 carbon atoms; Ra and Rb may be bonded to each other to form a 4-membered to 6-membered alicyclic structure; the symbol * represents a position at which the partial structure represented by formula (I) is bonded to the main chain or a side chain in the polymer compound.

## Patentansprüche

**1.** Tintenzusammensetzung für einen Tintenstrahl, enthaltend:

Titandioxid, das einen durchschnittlichen primären Partikeldurchmesser von 200 nm oder mehr aufweist, wobei der durchschnittliche primäre Partikeldurchmesser als ein aus einem zirkel-äquivalenten Durchmesser kalkulierter arithmetischer durchschnittlicher Wert erhalten wird;
ein wasserlösliches Harz;
selbst-dispergierende Harzpartikel mit einem durchschnittlichen Partikeldurchmesser von 30 nm oder weniger, wobei der durchschnittliche Partikeldurchmesser durch Messen eines volumendurchschnittlichen Partikeldurchmessers gemäß einem dynamischen Lichtstreuverfahren erhalten wird; und
Wasser, wobei ein in den selbst-dispergierenden Harzpartikeln enthaltenes Harz als Struktureinheit mit einer aromatischen Gruppe mindestens eine Struktureinheit mit einer Benzylgruppe oder eine Struktureinheit mit einer Phenoxygruppe aufweist.

**2.** Tintenzusammensetzung für einen Tintenstrahl nach Anspruch 1, wobei ein Gehalt an den selbst-dispergierenden Harzpartikeln von 5 Masse% bis 40 Masse%, bezogen auf die Gesamtmasse an dem Titandioxid, beträgt.

**3.** Tintenzusammensetzung für einen Tintenstrahl nach Anspruch 1 oder 2, wobei die selbst-dispergierenden Harzpartikel eine Glasübergangstemperatur von 90°C oder mehr aufweisen, wobei die Glasübergangstemperatur unter Verwendung eines Differential-Scanning-Kalorimeters gemessen wird.

**4.** Tintenzusammensetzung für einen Tintenstrahl nach einem der Ansprüche 1 bis 3, wobei eine Partikeloberfläche des Titandioxids mindestens ein Atom, ausgewählt aus der Gruppe bestehend aus einem Titanatom, einem Sauerstoffatom, einem Aluminiumatom, einem Zirkonatom, einem Kohlenstoffatom und einem Wasserstoffatom, enthält.

**5.** Tintenzusammensetzung für einen Tintenstrahl nach einem der Ansprüche 1 bis 4, wobei ein in den selbst-dispergierenden Harzpartikeln enthaltenes Harz eine Struktureinheit mit einer aromatischen Gruppe in einer Menge von insgesamt 3 Masse% bis 45 Masse%, bezogen auf die Gesamtmenge des Harzes, enthält.

6. Tintenzusammensetzung für einen Tintenstrahl nach einem der Ansprüche 1 bis 5, wobei ein in den selbst-dispergierenden Harzpartikeln enthaltenes Harz mindestens eine Struktureinheit, abgeleitet von Benzyl(meth)acrylat oder Phenoxyethyl(meth)acrylat in einer Menge von insgesamt 3 Masse% bis 45 Masse%; eine Struktureinheit, abgeleitet von (Meth)acrylsäure in einer Menge von insgesamt 5 Masse% bis 20% Masse%; und eine Struktureinheit abgeleitet von einem Alkyl(meth)acrylat in einer Menge von insgesamt 40 Masse% bis 90 Masse%, bezogen auf die Gesamtmenge des Harzes, enthält.

7. Tintenzusammensetzung für einen Tintenstrahl nach einem der Ansprüche 1 bis 6, wobei die selbst-dispergierenden Harzpartikel Harzpartikel sind, die durch ein Phaseninversions-Emulsionsverfahren erhalten sind.

8. Tintenzusammensetzung für einen Tintenstrahl nach einem der Ansprüche 1 bis 7, ferner enthaltend mindestens ein hydrophiles geschichtetes Tonmineral in einer Menge von insgesamt 0.1 Masse% bis 3 Masse%, bezogen auf die Gesamtmasse der Tintenzusammensetzung.

9. Tintenzusammensetzung für einen Tintenstrahl nach einem der Ansprüche 1 bis 8, ferner enthaltend eine wasserlösliche polymerisierbare Verbindung und einen Polymerisationsinitiator.

10. Tintenzusammensetzung für einen Tintenstrahl nach Anspruch 1, ferner enthaltend eine Polymerverbindung, enthaltend eine Wiederholungseinheit (g-1) mit einer durch die folgende Formel (I) dargestellten partiellen Struktur und einer Wiederholungseinheit (g-2) mit einer hydrophilen Gruppe

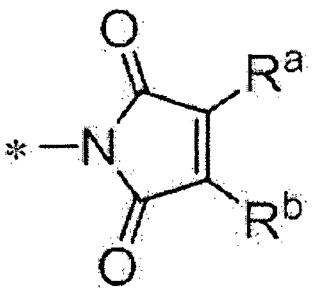

(I)

wobei in Formel (I) jedes Ra und Rb unabhängig ein Wasserstoffatom oder eine Alkylgruppe mit 1 bis 4 Kohlenstoffatomen darstellt, vorausgesetzt, dass mindestens eines aus Ra oder Rb eine Alkylgruppe mit 1 bis 4 Kohlenstoffatomen darstellt; Ra und Rb können aneinander gebunden sein, um eine 4-gliedrige bis 6-gliedrige alizyklische Struktur zu bilden; das Symbol * stellt eine Position dar, an der die durch Formel (I) dargestellte partielle Struktur an die Hauptkette oder an eine Seitenkette in der Polymerverbindung gebunden ist.

## Revendications

1. Composition d'encre pour un jet d'encre, comprenant :

du dioxyde de titane présentant un diamètre moyen de particules primaires de 200 nm ou plus, dans laquelle ledit diamètre moyen de particules primaires est obtenu comme une valeur moyenne arithmétique calculée à partir d'un diamètre de cercle équivalent ;
une résine soluble dans l'eau ;
lesdites particules de résine auto-dispersante présentant un diamètre moyen de particules de 30 nm ou moins, dans laquelle ledit diamètre moyen de particules est obtenu en mesurant un diamètre moyen de particules en volume selon une méthode de diffusion de lumière dynamique, et
de l'eau, dans laquelle une résine incluse dans les particules de résine auto-dispersante inclut au moins une unité parmi une unité structurale présentant un groupe benzyle ou une unité structurale présentant un groupe phénoxy, comme unité structurale présentant un groupe aromatique.

2. Composition d'encre pour un jet d'encre selon la revendication 1, dans laquelle une teneur en particules de résine auto-dispersante s'étend de 5 % en masse à 40 % en masse, par rapport à la masse totale du dioxyde de titane.

3. Composition d'encre pour un jet d'encre selon la revendication 1 ou 2, dans laquelle les particules de résine auto-dispersante présentent une température de transition vitreuse de 90 °C ou plus, dans laquelle la température de transition vitreuse est mesurée à l'aide d'un calorimètre à compensation de puissance.

**4.** Composition d'encre pour un jet d'encre selon l'une quelconque des revendications 1 à 3, dans laquelle une surface de particule du dioxyde de titane inclut au moins un atome sélectionné parmi le groupe consistant en un atome de titane, un atome d'oxygène, un atome d'aluminium, un atome de zirconium, un atome de carbone, et un atome d'hydrogène.

**5.** Composition d'encre pour un jet d'encre selon l'une quelconque des revendications 1 à 4, dans laquelle une résine incluse dans les particules de résine auto-dispersante inclut une unité structurale présentant un groupe aromatique dans une quantité allant de 3 % en masse à 45 % en masse au total, par rapport à la quantité totale de la résine.

**6.** Composition d'encre pour un jet d'encre selon l'une quelconque des revendications 1 à 5, dans laquelle une résine incluse dans les particules de résine auto-dispersante inclut : au moins une unité structurale dérivée du (méth)acrylate de benzyle ou du (méth)acrylate de phénoxyéthyle en une quantité allant de 3 % en masse à 45 % en masse au total ; une unité structurale dérivée de l'acide (méth)acrylique en une quantité allant de 5 % en masse à 20 % en masse au total, et une unité structurale dérivée du (méth)acrylate d'alkyle en une quantité allant de 40 % en masse à 90 % en masse au total, par rapport à la quantité totale de la résine.

**7.** Composition d'encre pour un jet d'encre selon l'une quelconque des revendications 1 à 6, dans laquelle les particules de résine auto-dispersante sont des particules de résine obtenues par une méthode d'émulsification à inversion de phase.

**8.** Composition d'encre pour un jet d'encre selon l'une quelconque des revendications 1 à 7, comprenant en outre au moins un minéral argileux à couches hydrophile en une quantité allant de 0,1 % en masse à 3 % en masse au total, par rapport à la masse totale de la composition d'encre.

**9.** Composition d'encre pour un jet d'encre selon l'une quelconque des revendications 1 à 8, comprenant en outre un composé polymérisable soluble dans l'eau et un initiateur de polymérisation.

**10.** Composition d'encre pour un jet d'encre selon la revendication 1, comprenant en outre un composé polymère incluant un motif répété (g-1) présentant une structure partielle représentée par la formule suivante (I) et un motif répété (g-2) présentant un groupe hydrophile

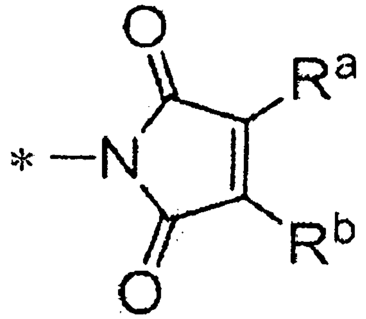

(I)

où, dans la formule (I), chacun de Ra et Rb représente indépendamment un atome d'hydrogène ou un atome alkyle présentant de 1 à 4 atomes de carbone, à condition qu'au moins Ra et Rb représentent un groupe alkyle présentant de 1 à 4 atomes ; Ra et Rb peuvent être liés l'un à l'autre pour former un structure alicyclique de 4 chaînons à 6 chaînons ; le symbole* représente une position sur laquelle la structure partielle représentée par la formule (I) est liée à la chaîne principale ou à une chaîne latérale dans le composé polymère.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010511747 A
- JP 2009167377 A
- JP 2011225867 A
- US 2012293578 A1
- US 2011184108 A1
- JP 2003105233 A
- JP 2003253170 A
- WO 2004069551 A1
- US 2013066006 A1
- JP 2010064480 A
- JP 2011068085 A
- JP 2007100071 A
- JP 2011178029 A
- JP 2013018846 A
- JP 2010069805 A
- JP 2011046872 A
- JP 2011178896 A
- JP 2011174013 A
- JP 2011195822 A
- JP S52988 A
- JP H4251258 A
- JP 2011074150 A
- JP 2011079901 A
- US 5891611 A
- JP 2011042150 A
- JP H8169172 A
- JP H827693 B
- JP H2276670 B
- JP H7276789 B
- JP H9323475 B
- JP S62238783 B
- JP H10153989 B
- JP H10217473 B
- JP H10235995 B
- JP H10337947 B
- JP H10217597 B
- JP 2003306623 A
- JP S5459936 A


### Non-patent literature cited in the description


- **J. BRANDRUP ; E. H. IMMERGUT.** Polymer Handbook. Wiley-Interscience, 1989